(19) Europäisches Patentamt / European Patent Office / Office européen des brevets

(11) **EP 4 738 720 A1**

(12) **EUROPEAN PATENT APPLICATION**
published in accordance with Art. 153(4) EPC

(43) Date of publication:
06.05.2026 Bulletin 2026/19

(21) Application number: 24832508.6

(22) Date of filing: 28.06.2024

(51) International Patent Classification (IPC):
*H04B 7/06* (2006.01)   *H04B 7/0413* (2017.01)
*H04B 7/04* (2017.01)   *H04B 17/318* (2015.01)
*H04W 72/21* (2023.01)   *H04W 72/231* (2023.01)
*H04W 72/232* (2023.01)

(52) Cooperative Patent Classification (CPC):
H04B 7/04; H04B 7/0413; H04B 7/06;
H04B 17/318; H04W 72/21; H04W 72/231;
H04W 72/232

(86) International application number:
PCT/KR2024/009116

(87) International publication number:
WO 2025/005732 (02.01.2025 Gazette 2025/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.06.2023 KR 20230084152

(71) Applicants:
• **Hyundai Motor Company**
  **Seoul 06797 (KR)**
• **Kia Corporation**
  **Seoul 06797 (KR)**
• **Seoul National University R&DB Foundation**
  **Seoul 08826 (KR)**

(72) Inventors:
• **LEE, Jeong Su**
  **Hwaseong-si, Gyeonggi-do 18280 (KR)**
• **HONG, Ui Hyun**
  **Hwaseong-si, Gyeonggi-do 18280 (KR)**
• **SUH, Young Kil**
  **Hwaseong-si, Gyeonggi-do 18280 (KR)**
• **HAHN, Gene Back**
  **Hwaseong-si, Gyeonggi-do 18280 (KR)**
• **CHOI, Wan**
  **Seoul 08826 (KR)**
• **KWON, Jeonghyeon**
  **Seoul 08826 (KR)**
• **KIM, Dong Hwi**
  **Seoul 08826 (KR)**

(74) Representative: **Viering, Jentschura & Partner
mbB**
**Patent- und Rechtsanwälte**
**Am Brauhaus 8**
**01099 Dresden (DE)**

(54) **METHOD AND APPARATUS FOR BEAM MANAGEMENT IN COMMUNICATION SYSTEM HAVING EXTRA-LARGE SCALE MULTIPLE INPUT AND MULTIPLE OUTPUT**

(57) A method of a terminal according to the present disclosure comprises the steps of: transmitting a first signal including a terminal beam index and a first RS for each beam to a base station by beam sweeping terminal beams; receiving scatterer information existing on a communication path between the terminal and the base station from the base station; receiving information on the number of estimation steps for antenna estimation from the base station; performing a first procedure of hierarchically estimating, for each scatterer included in the scatterer information and the base station, VRs among antennas of the base station as many as the information on the number of estimation steps; and performing a second procedure for determining a base station beam to be used by the base station and each VR.

Processed by Luminess, 75001 PARIS (FR)

【FIG. 15】

**S1510 — scatterer sensing process**

- S1511: base station/terminal — transmit/receive RS for scatterer sensing
- S1512: base station/terminal — select a base station beam and a terminal beam corresponding to each scatterer

**S1520 — hierarchical VR estimation process**

- S1521: base station — calculate a number of stages for hierarchical VR estimation process
- S1522: base station/terminal — terminal transmits RS and base station receives signals through representative antennas
- S1523: base station/terminal — measure RSRPs, compare RSRPs with a VR threshold, and configure an antenna candidate group for the next stage
- S1524: base station/terminal — VR estimation for all scatterers

**S1530 — base station beam/terminal beam selection process**

- S1531: base station/terminal — select a scatterer through comparison of performances of scatterer-VR combinations
- S1532: base station/terminal — form candidate beams through the selected VR, and select a candidate beam based on RSRPs

**Description**

[Technical Field]

The present disclosure relates to an enhanced communication technique, and more particularly, to a technique for beam management in a communication system based on extra-large scale multiple input multiple output (XL-MIMO).

[Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a 5G communication system serves a plurality of terminals simultaneously and employs a massive multiple-input multiple-output (MIMO) system to achieve higher data transmission rates. When a base station utilizes a massive MIMO system, it can achieve not only a higher data transmission rate for the terminal but also low inter-user interference and high energy efficiency by concentrating a beam on a specific location.

When Frequency Range 2 (FR2) used in the 5G system and/or higher frequency bands expected to be used in a 6G system are used, a transmission signal is subject to a reduction in communication coverage due to high path attenuation. As one method to compensate for the problem of reduced communication coverage, a massive MIMO system may be used.

Although the current massive MIMO system has the above-described advantages, the system has a limitation that it is difficult to obtain a sufficient spatial dimension because a very large number of antennas are deployed and used in a narrow space. A future 6G communication system is considering a form in which a large number of antennas are deployed on wide walls of buildings such as airports, shopping malls, and stadiums in order to obtain additional spatial dimensions beyond the massive MIMO system. A system in which a larger number of antennas are deployed over a wide area in order to obtain additional spatial dimensions compared to the massive MIMO system is defined as an extra-large scale massive MIMO (XL-MIMO) system.

Therefore, methods and apparatuses for managing beams in the XL-MIMO system are required.

[Disclosure]

[Technical Problem]

The present disclosure is directed to providing a method and an apparatus for beam management in a communication system based on XL-MIMO.

[Technical Solution]

A method of a terminal, according to a first exemplary embodiment of the present disclosure for achieving the above-described objective, may comprise: transmitting, to a base station, a first signal including a terminal beam index for each beam and a first reference signal (RS) by performing beam sweeping of terminal beams; receiving, from the base station, information on scatterer(s) existing on a communication path between the terminal and the base station; receiving, from the base station, information on a number of estimation stages for antenna estimation; performing, with the base station, a first procedure of hierarchically estimating visibility regions (VRs) of antennas of the base station by the number of estimation stages for each scatterer of the scatterer(s); and performing, with the base station, a second procedure of determining base station beams to be used in each of the VRs.

The information on the scatterer(s) includes a scatterer identifier and a terminal beam index corresponding to each scatterer.

The method may further comprise: transmitting information on a service to be provided to the terminal and VR-related information to the base station after receiving the information on the scatterer(s).

The VR-related information may include at least one of information on whether hierarchical VR estimation is supported, or information on a number of beams that the terminal is capable of forming simultaneously.

The first procedure may further comprise:

receiving, from the base station, an RS transmission instruction through a terminal beam corresponding to at least one scatterer of the scatterer(s); and transmitting RS based on the RS transmission instruction.

The RS transmission instruction may include:

at least one of a periodicity of transmitting the RS, a time of transmitting the RS, or a number of transmissions of the RS.

The second procedure may further comprise:

receiving, from the base station, an RS transmission instruction through a terminal beam corresponding to at least one scatterer of the scatterer(s); transmitting a second signal including a second RS based on the RS transmission instruction; receiving, from the base station, a reference signals received power (RSRP) measurement reporting instruction message including terminal beam information; measuring an RSRP of an RS received from the base station through a terminal beam indicated by the terminal beam information; and reporting the measured RSRP to the base station.

The base station may have an extra-large scale multiple input multiple output (XL-MIMO) antenna, and each of the scatterer(s) may include at least one or more of a building, a vehicle, a person, a structure, an intelligent reflecting surface (IRS), a reconfigurable intelligent surface (RIS), or particles in the air.

A method of a base station, according to exemplary embodiments of the present disclosure, may comprise: receiving, through beam sweeping over an entire antenna array of an extra-large scale multiple input multiple output (XL-MIMO) antenna, a first signal including a reference signal (RS) from a terminal; measuring a first reference signals received power (RSRP) of the first signal to acquire information on scatterer(s); transmitting the information on the scatterer(s) to the terminal; determining a number of estimation stages for XL-MIMO antenna estimation; transmitting information on the determined number of estimation stages to the terminal; performing a first procedure of hierarchically estimating visibility regions (VRs) of the XL-MIMO antenna by the number of estimation stages for each scatterer of the scatterer(s); and performing a second procedure of determining base station beams to be used with the terminal in one or more VRs.

The information on the scatterer(s) includes a scatterer identifier and a terminal beam index corresponding to each scatterer.

The method may further comprise: receiving information on a service of the terminal and VR-related information from the terminal after transmitting the information on the scatterer(s).

The VR-related information may include at least one of information on whether hierarchical VR estimation is supported, or information on a number of beams that the terminal is capable of forming simultaneously.

The first procedure may further comprise:

determining a number of estimation stages of the VRs; and performing a third procedure for VR determination on an entire array of the XL-MIMO antenna by the determined number of estimation stages.

The number of estimation stages of the VRs is determined based on at least one of a latency requirement received from the terminal or a number of antenna ports that the base station is capable of using transmission and reception simultaneously.

The third procedure may comprise, for each scatterer:

dividing the entire array of the XL-MIMO antenna into a predetermined number of first antenna regions; selecting first representative antennas for the divided first antenna regions, respectively; measuring second RSRPs of RSs received from the terminal through the first representative antennas; determining first antenna region(s) including the first representative antennas having the second RSRPs exceeding a preset first threshold as VR candidate region(s); dividing each of the VR candidate region(s) into a predetermined number of second antenna regions; selecting second representative antennas for the divided second antenna regions, respectively; measuring third RSRPs of RSs received from the terminal through the second representative antennas; and determining second antenna region(s) including the second representative antennas having the third RSRP exceeding a preset second threshold as a VR.

The second procedure may further comprise, for each scatterer:

transmitting an RS transmission instruction message through a terminal beam corresponding to each scatterer; measuring fourth RSRPs of RSs received from the terminal through antennas of the VR; determining a scatterer-VR combination based on the measured fourth RSRPs; and performing a fourth procedure of determining a subdivided beam to communicate with the terminal based on the determined scatterer-VR combination.

The fourth procedure may further comprise:

transmitting information on the determined scatterer-VR combination to the terminal; subdividing each of base station beams to be transmitted through the VRs into a predetermined number of beams; transmitting, to the terminal, an RSRP measurement reporting instruction message including terminal beam information; determining combinations composed of pairs of subdivided beams of different VRs; transmitting RSs to the terminal through beams based on the combinations composed of the pairs of subdivided beams; receiving, from the terminal, an RSRP reporting message corresponding to the beams based on the combinations composed of the pairs of subdivided beams; and determining a base station beam among the subdivided beams based on the received RSRP reporting message.

A terminal, according to exemplary embodiments of the present disclosure, may comprise at least one processor, and the at least one processor may cause the terminal to:

transmit, to a base station, a first signal including a terminal beam index for each beam and a first reference signal (RS) by performing beam sweeping of terminal beams; receive, from the base station, information on scatterer(s) existing on a communication path between the terminal and the base station; receive, from the base station, information on a number of estimation stages for antenna estimation; perform, with the base station, a first procedure of hierarchically estimating visibility regions (VRs) of antennas of the base station by the number of estimation stages for each scatterer of the scatterer(s); and perform, with the base station, a second procedure of determining base station beams to be used in each of the VRs.

The information on the scatterer(s) includes a scatterer identifier and a terminal beam index corresponding to each scatterer.

The at least one processor may be further configured to:

transmit information on a service to be provided to the terminal and VR-related information to the base station after receiving the information on the scatterer(s).

The VR-related information may include at least one of information on whether hierarchical VR estimation is supported, or information on a number of beams that the terminal is capable of forming simultaneously.

The at least one processor may be further configured, during the first procedure, to:

receive, from the base station, an RS transmission instruction through a terminal beam corresponding to at least one scatterer of the scatterer(s); and transmit RS based on the RS transmission instruction.

The RS transmission instruction may include:

at least one of a periodicity of transmitting the RS, a time of transmitting the RS, or a number of transmissions of the RS.

The at least one processor may be further configured, during the second procedure, to:

receive, from the base station, an RS transmission instruction through a terminal beam corresponding to at least one scatterer of the scatterer(s); transmit a second signal including a second RS based on the RS transmission instruction; receive, from the base station, a reference signals received power (RSRP) measurement reporting instruction message including terminal beam information; measure an RSRP of an RS received from the base station through a terminal beam indicated by the terminal beam information; and report the measured RSRP to the base station.

[Advantageous Effects]

According to the present disclosure, a communication path through a scatterer can be established in a base station having an XL-MIMO antenna and a terminal. In addition, when two or more scatterers exist, a communication path through an optimal scatterer can be established. A terminal beam corresponding to the optimal scatterer can be selected. Furthermore, by stepwise searching for a visibility region (VR) in an XL-MIMO antenna array, there is an advantage of reducing an antenna array region capable of communicating with the terminal. In addition, by further subdividing beams in the selected antenna array, there is an advantage of reducing interference with other terminals.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a block diagram illustrating a first exemplary embodiment of communication nodes performing communication.

FIG. 4A is a block diagram illustrating a first exemplary embodiment of a transmission path.

FIG. 4B is a block diagram illustrating a first exemplary embodiment of a reception path.

FIG. 5 is a conceptual diagram illustrating a first exemplary embodiment of a system frame in a communication system.

FIG. 6 is a conceptual diagram illustrating a first exemplary embodiment of a subframe in a communication system.

FIG. 7 is a conceptual diagram illustrating a first exemplary embodiment of a slot in a communication system.

FIG. 8 is a conceptual diagram illustrating a first exemplary embodiment of a time-frequency resource in a communication system.

FIG. 9 is a conceptual diagram illustrating a case in which a base station having an XL-MIMO panel communicates with a terminal.

FIG. 10 is a conceptual diagram illustrating a method of finding scatterers existing on a communication link between a base station and a terminal.

FIG. 11A is a sequence chart according to a first exemplary embodiment for detecting scatterers existing in a communication path between a base station and a terminal.

FIG. 11B is a sequence chart according to a second exemplary embodiment for detecting scatterers existing in a communication path between a base station and a terminal.

FIG. 12A is a partial flowchart illustrating an operation for hierarchical VR estimation in a base station.

FIG. 12B is a remaining part of the flowchart illustrating the operation for hierarchical VR estimation in the base station.

FIG. 13A is a conceptual diagram illustrating antenna region division for an entire antenna array of an XL-MIMO antenna panel and configuration of a representative antenna for each region.

FIG. 13B is a conceptual diagram illustrating a procedure of dividing an antenna array and selecting representative antennas in the second stage of VR estimation.

FIG. 14A is a partial flowchart of an operation for selecting a base station beam and a terminal beam in a communication system using an XL-MIMO antenna.

FIG. 14B is a remaining flowchart of the operation for selecting a base station beam and a terminal beam in the communication system using the XL-MIMO antenna.

FIG. 15 is a conceptual diagram illustrating a beam management method in consideration of VR in a communication system using an XL-MIMO antenna.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

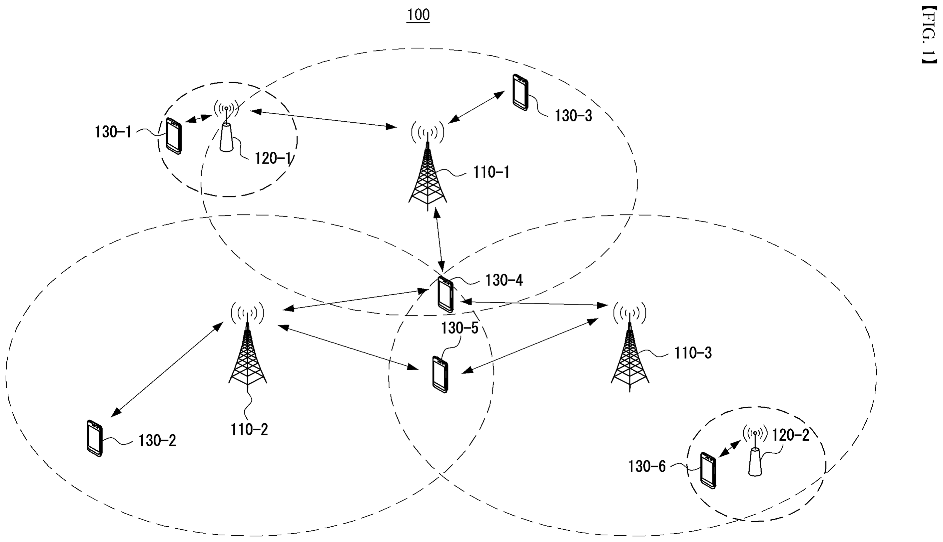

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

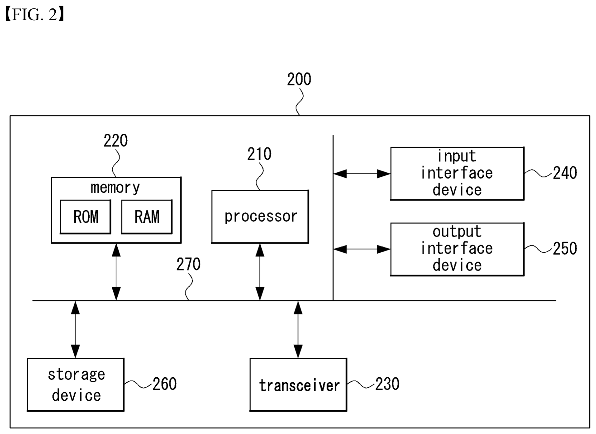

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

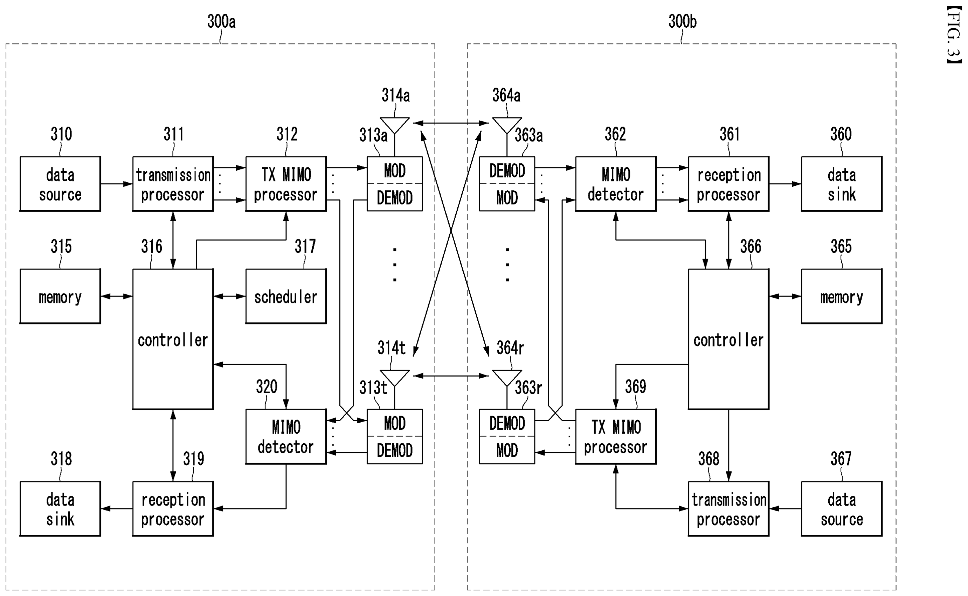

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

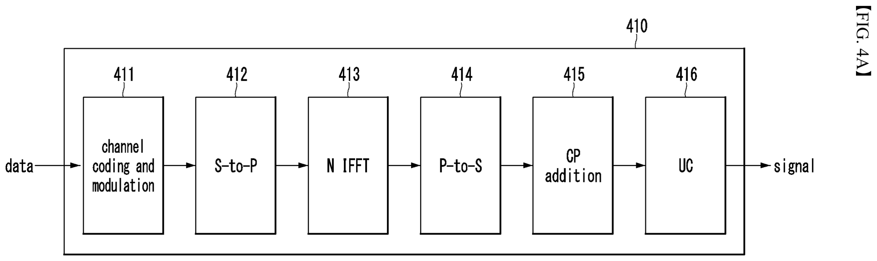

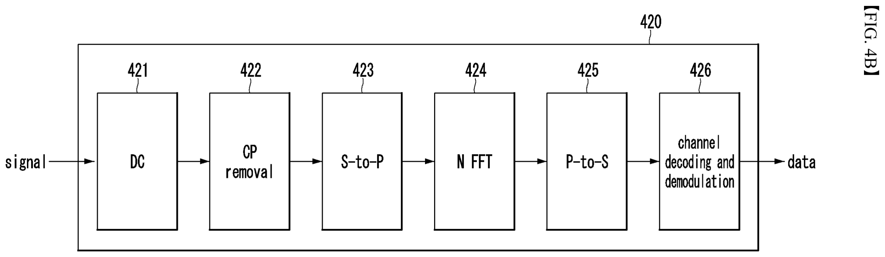

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

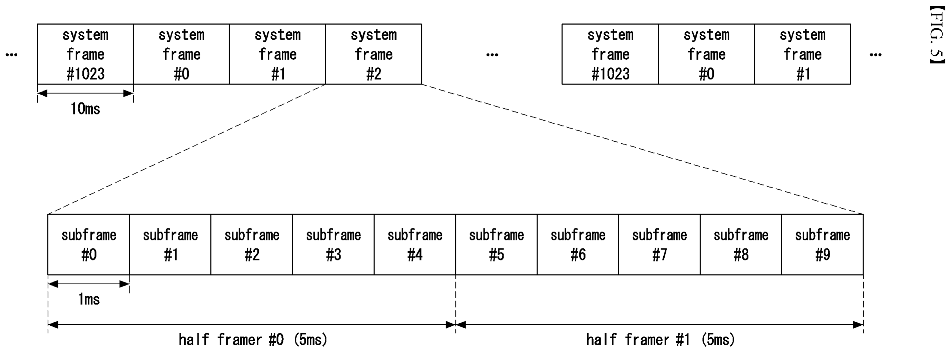

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

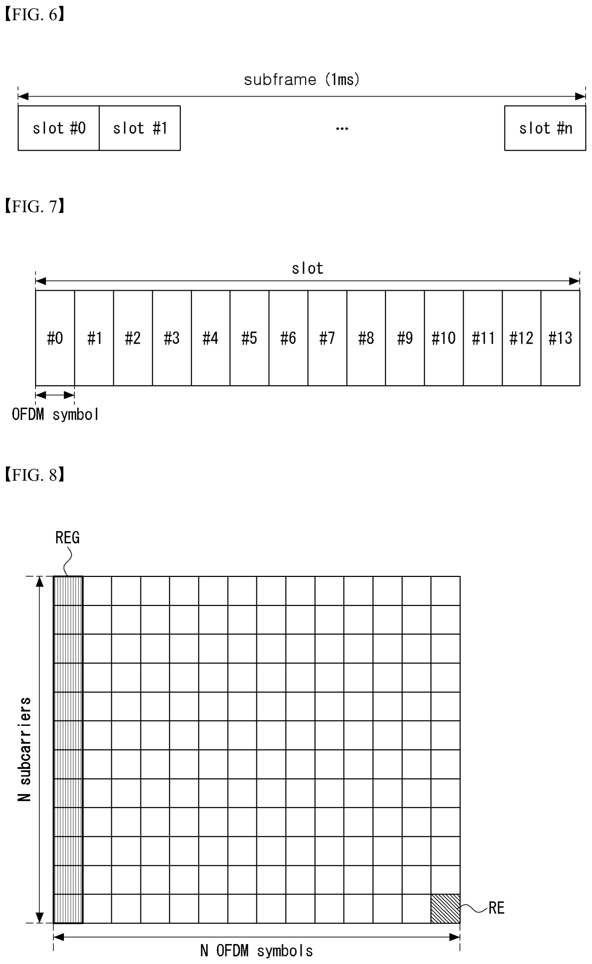

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., $\mu$ = 0), the length of slot may be 1 ms. In this case, one system frame may include 10 slots. When a subcarrier spacing is 30 kHz (e.g., $\mu$ = 1), the length of slot may be 0.5 ms. In this case, one system frame may include 20 slots.

When a subcarrier spacing is 60 kHz (e.g., $\mu$ = 2), the length of slot may be 0.25 ms. In this case, one system frame may include 40 slots. When a subcarrier spacing is 120 kHz (e.g., $\mu$ = 3), the length of slot may be 0.125 ms. In this case, one system frame may include 80 slots. When a subcarrier spacing is 240 kHz (e.g., $\mu$ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, in the future 6G communication system, a form in which a larger number of antennas are arranged on large structures such as walls of airports, shopping malls, and stadiums is being considered in order to obtain additional spatial dimensions beyond the massive MIMO system. A system in which a large number of antennas are deployed over a wider area to obtain additional spatial dimensions beyond the massive MIMO system is referred to as an extra-large scale massive MIMO (XL-MIMO) system.

The XL-MIMO system may obtain not only a high data rate, low inter-terminal interference, and high energy efficiency, which could be achieved through the massive MIMO system, but also a spatial dimension gain that could not be obtained through the massive MIMO system, by arranging a far larger number of antennas than those in the massive MIMO system extensively on places such as large building walls. In the XL-MIMO system, depending on antenna regions, a phenomenon occurs in which different physical channel characteristics appear for a specific terminal, and this phenomenon is defined as a channel non-stationary phenomenon. The channel non-stationary phenomenon may exist in both downlink and uplink. In the uplink, due to the channel non-stationary phenomenon, a signal transmitted by a terminal may be received only by specific antenna region(s) within the XL-MIMO system. In the case of downlink, due to the channel non-stationary characteristic, among signals transmitted by a base station, only signals transmitted in specific antenna region(s) may cause a reference signal received power (RSRP) at the terminal to exceed an RSRP threshold.

Due to the channel non-stationary phenomenon, when communication is performed between the terminal and the base station, only specific antenna region(s) within the XL-MIMO system may effectively transmit and receive signals. In the following description, downlink (DL) antenna region(s) and uplink (UL) antenna region(s) in which communication between a specific terminal and the base station is possible as described above are defined as visibility region(s) (VR(s)). Therefore, in the XL-MIMO system, it may be very important to find a VR for each terminal depending on a given environment.

In the current 5G NR communication system that is being standardized and commercialized, a base station uses a massive MIMO system. Therefore, in the case of the 5G NR communication system, when the base station performs communication with terminals, the base station does not find an antenna region for a specific terminal and does not serve the terminal based thereon. In other words, in the case of the 5G NR communication system, a method of transmitting and receiving signals by using the entire antenna array of the base station is used. The operation of the current 5G NR communication system employing massive MIMO is described as follows.

In the 5G NR communication system, the base station may transmit a channel state information-reference signal (CSI-RS) for DL channel estimation of the terminal. In this case, the base station may transmit CSI-RS by selecting a few different antenna ports among the entire antenna ports. Specifically, according to Section 7.4.1.5 of 3GPP TS 38.211, CSI-RS may be transmitted through specific antenna ports among multiple antennas. An antenna port $p$ through which CSI-RS is transmitted may be calculated as in Equation 1 below.

[Equation 1]

$$p = 3000 + s + jL$$

where

$$j = 0,1,\ldots,\frac{N}{L} - 1, s = 0,1,\ldots,L - 1$$

In Equation 1, s may denote a sequence index determined by Tables 7.4.1.5.3-2 to 7.4.1.5.3-5 of 3GPP TS 38.211, L may denote a code division multiplexing (CDM) group size that may have one value of {1, 2, 4, 8}, and N may denote the number of CSI-RS ports.

For example, when the number of CSI-RS ports N is 8, the CDM group size $L$ is 2, and the sequence index s has a value of {0, 1}, the value of $j$ may be 0, 1, 2, or 3. Therefore, the antenna port $p$ through which CSI-RS is transmitted may be expressed as in Equation 2 below.

[Equation 2]

$$p = 4000 + s + jL = 3000 + \{0,1\} + \{0,1,2,3\} * 2$$

According to Equation 2, the antenna ports $p$ through which CSI-RS is transmitted may be determined as {3000, 3001, 3002, 3003, 3004, 3005, 3006, 3007}.

In the current 5G NR technical specifications, the maximum number of CSI-RS antenna ports defined is 32. When the number of panels is 2, a maximum of 16 antenna ports may be used per panel, and when the number of panels is 4, a maximum of 8 antenna ports may be used per panel.

However, when the base station having the XL-MIMO system selects some of the entire antenna ports and transmit CSI-RS through the selected antenna ports as specified in the current standard, the larger the number of antennas, the greater the total number of antenna ports. On the other hand, in the XL-MIMO system, an effective communication region with a specific terminal is limited to a VR. Therefore, when the base station fails to transmit CSI-RS through the correct VR, a possibility that the terminal cannot receive CSI-RS increases. As the number of antennas constituting the antenna array of the XL-MIMO system increases, a proportion of the terminal's VR relative to the entire antenna array decreases. Therefore, as the number of antennas constituting the antenna array of the XL-MIMO system increases, the possibility that the terminal cannot receive CSI-RS further increases. Therefore, when the base station having the XL-MIMO system performs communication with a terminal, a process of efficiently identifying a VR of the terminal in advance and allocating resources based on the identified VR is required.

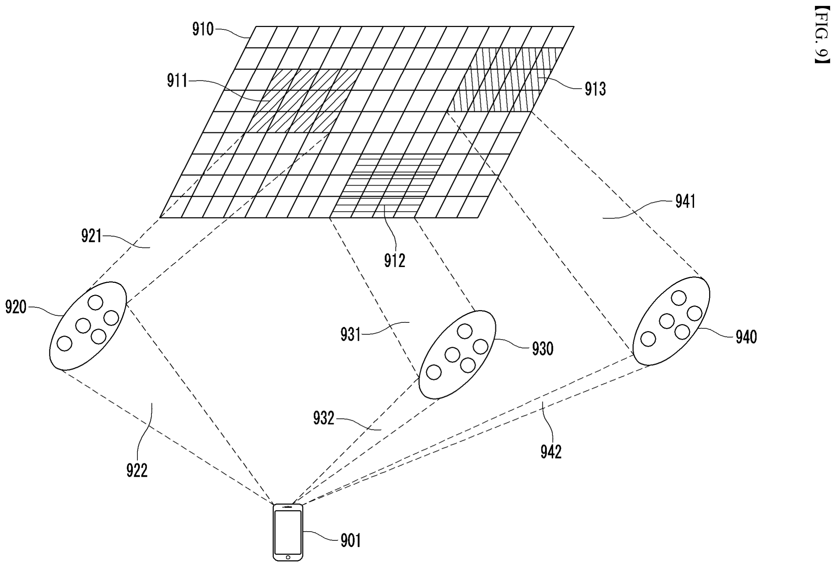

FIG. 9 is a conceptual diagram illustrating a case in which a base station having an XL-MIMO panel communicates with a terminal.

As shown in FIG. 9, a communication system may include an XL-MIMO antenna panel 910, a terminal 901, and a plurality of scatterers 920, 930, and 940. The XL-MIMO antenna panel 910 or a base station having the XL-MIMO antenna panel 910 may also be referred to as an "XL-MIMO antenna system" or an "XL-MIMO system". In the example of FIG. 9, it should be noted that the configuration of devices of the base station connected to the XL-MIMO antenna panel 910 is not illustrated. The XL-MIMO antenna panel 910 may have a large number of antennas arranged on large walls of places such as airports, shopping malls, and stadiums, as described above. Each square of the XL-MIMO antenna panel 910 illustrated in FIG. 9 may be an antenna element or a small antenna panel. In the following description, for convenience of description, the antenna element is considered to include a small antenna panel. The scatterers 920, 930, and 940 may exist in a communication link between the XL-MIMO antenna panel 910 of the base station and the terminal 901. The scatterers 920, 930, and 940 may be any materials that cause signals transmitted and received on a communication link between the XL-MIMO antenna panel 910 of the base station and the terminal 901 to reach the base station and/or the terminal 901 through reflection, scattering, refraction, and/or diffraction. Therefore, the scatterers may be determined depending on a given communication environment. For example, the scatterers may include buildings, vehicles, people, structures, intelligent reflecting surfaces (IRS), reconfigurable intelligent surfaces (RIS), and/or particles in the air.

Some antenna elements 911, 912, and 913 of the XL-MIMO antenna panel 910 may form channels to the terminal 901 through the scatterers 920, 930, and 940. For example, through a channel 921 between a first group of antenna elements 911 of the XL-MIMO antenna panel 910 and the first scatterer 920 and a channel 922 between the first scatterer 920 and the terminal 901, one channel may be formed between the first group of antenna elements 911 and the terminal 901. In addition, through a channel 931 between a second group of antenna elements 912 of the XL-MIMO antenna panel 910 and the second scatterer 930 and a channel 932 between the second scatterer 930 and the terminal 901, another channel may be formed between the second group of antenna elements 912 and the terminal 901. Furthermore, through a channel 941 between a third group of antenna elements 913 of the XL-MIMO antenna panel 910 and the third scatterer 940 and a channel 942 between the third scatterer 940 and the terminal 901, yet another channel may be formed between the third group of antenna elements 913 and the terminal 901. The number of scatterers may also be interpreted as the number of effective paths existing on the communication link between the base station and the terminal.

Although only three different scatterers 920, 930, and 940 are illustrated in FIG. 9, the scatterers may be greater or fewer in number than those illustrated in FIG. 9. As illustrated in FIG. 9, a signal transmitted by the base station having the XL-MIMO antenna panel 910 may be transmitted to the terminal 901 through the scatterer(s). In addition, as illustrated in FIG. 9, a signal transmitted from the base station having the XL-MIMO antenna panel 910 to the terminal 901 is not uniformly observed over the entire XL-MIMO antenna panel 910 but tends to be concentrated in some antenna elements. In other words, in the XL-MIMO antenna panel 910, transmission and reception of a signal to and from the terminal 901 may be possible only through some antenna elements, namely through the VR defined above.

As described above, since the XL-MIMO antenna panel 910 includes a very large number of antenna elements and communication with a terminal is possible only through specific VR(s) among them, consideration of the VR(s) is essential in a communication system equipped with the XL-MIMO antenna panel 910.

In the following description, the present disclosure describes methods and apparatuses for identifying scatterers that exist on a communication link between a base station and a terminal and for determining combinations of the identified scatterers and visibility regions (VRs) based on the VRs when communication is performed using an XL-MIMO antenna panel. In addition, the present disclosure also describes beam management methods and apparatuses for identifying a base station beam and a terminal beam by forming base station beams based on the corresponding VR(s).

A method according to the present disclosure may include three procedures for beam management operations. The procedures may include the following: first, sensing scatterers that exist on a communication link between the XL-MIMO antenna panel and the terminal; second, estimating VRs on the XL-MIMO antenna panel for the sensed scatterers; and third, forming a beam candidate group between the XL-MIMO antenna panel and the terminal and performing beam selection between the base station and the terminal based on performance measurements of each beam in the beam candidate group.

[1]. Scatterer sensing method for a communication link between a base station and a terminal in the XL-MIMO system

A scatterer detection method for a communication link between a base station and a terminal in the XL-MIMO system may consist of two sub-steps. The first step may be to find scatterer(s) existing on the communication link between the base station and the terminal. The second step may be to find a base station beam and a terminal beam corresponding to the scatterer(s).

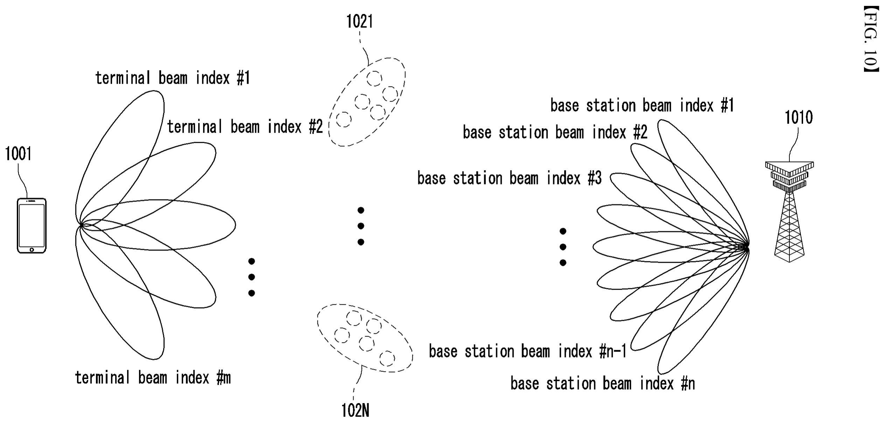

FIG. 10 is a conceptual diagram illustrating a method of finding scatterers existing on a communication link between a base station and a terminal.

As shown in FIG. 10, a terminal 1001, a base station 1010, and scatterers 1021, ..., and 102N are illustrated. First, the base station 1010 may be a base station having an XL-MIMO antenna panel (not illustrated in FIG. 10) as described above with reference to FIG. 9. The base station 1010 may include all or some of the components described above with reference to FIG. 2, and may further include additional components other than the components illustrated in FIG. 2. For example, the base station 1010 may further include an interface for communicating with a core network, an interface for communicating with an adjacent base station, and an interface for communicating with other communication devices (e.g., remote transceiver(s)) connected below.

The base station 1010 may perform beam sweeping by using the entire antenna elements (or antenna panels) of the XL-MIMO antenna panel. As illustrated in FIG. 10, when the base station 1010 performs beam sweeping by using the entire antenna elements, the base station 1010 may assign a beam index to each beam. In the following description, in order to identify the base station's beams, indexes of beams transmitted (or received) by the base station 1010 are referred to as base station beam indexes. When the number of beams that the base station 1010 is able to transmit is n, the base station 1010 may sequentially sweep beams in an order of base station beam index #1, base station beam index #2, base station beam index #3, ..., base station beam index #n-1, and base station beam index #n to perform transmission (or reception). Each of the beams transmitted by beam sweeping of the base station 1010 may include base station information and/or a reference signal (RS). The signals transmitted through the base station beams may include information identical or similar to a synchronization signal block (SSB) of the 5G NR system. The base station 1010 may transmit a signal including the base station information and RS to the terminal 1001 by using only some antenna elements or some antenna panels included in the XL-MIMO antenna panel.

The terminal 1001 has a plurality of antennas and may form transmission beams and/or reception beams by using the plurality of antennas. The terminal 1001 may include all or some of the components described above with reference to FIG. 2, and may further include additional components other than those illustrated in FIG. 2. The terminal 1001 may further

EP 4 738 720 A1

include various devices such as sensors (e.g., geomagnetic sensors, altitude sensors, etc.) for user convenience and a graphical user interface (GUI).

The terminal 1001 may form a reception beam by using the plurality of antennas, and may receive a signal transmitted by the base station 1010 through beamforming. In addition, the terminal 1001 may form a transmission beam by using a plurality of antennas, and may transmit a signal to the base station 1010. As illustrated in FIG. 10, the terminal 1001 may assign a beam index to each of the beams in order to identify the plurality of beams. In the following description, in order to identify the terminal's beams, indexes of the beams transmitted (or received) by the terminal 1001 are referred to as terminal beam indexes. When the number of beams that the terminal 1001 is able to transmit (or receive) is m, the terminal 1001 may sequentially sweep the beams in an order of terminal beam index #1, terminal beam index #2, ..., and terminal beam index #m to transmit (or receive) signals.

The scatterers 1021, ..., and 102N illustrated in FIG. 10 may exist in one or more instances or may not exist at all. It should be noted that the scatterers 1021, ..., and 102N are represented by dotted lines to indicate that the scatterers 1021, ..., and 102N may or may not exist. The scatterers 1021, ..., and 102N may include buildings, vehicles, people, structures, IRS, RIS, and/or particles in the air, as described above with reference to FIG. 9.

The XL-MIMO system illustrated in FIGS. 9 and 10 includes a very large number of antenna elements. Therefore, in conventional methods used so far, for example, a method of transmitting a signal through each antenna and determining a VR based on an RSRP measurement report received from a terminal may be highly inefficient. This is because the XL-MIMO system includes an enormous number of antenna elements that far exceeds that of a conventional massive MIMO system. Accordingly, when estimating a VR in the XL-MIMO system using a conventional method, not only may a very long time be required, but the procedural complexity may also significantly increase. Therefore, the present disclosure proposes a hierarchical VR estimation procedure capable of efficiently determining a VR in the XL-MIMO system.

According to the hierarchical VR estimation process proposed in the present disclosure, the entire VR estimation process may be divided into multiple VR estimation stages, and in each VR estimation stage, the base station may receive a signal of the terminal through a representative antenna for a candidate antenna group, and may form a candidate antenna group of the next VR estimation stage based on reception performance. The base station may repeat this process several times and may estimate a VR in a manner of determining a final VR at the last VR estimation stage.

In conclusion, in the present disclosure, when a beam management process is performed in a process of performing communication through the XL-MIMO system, in order to select a beam in a resource-efficient manner, a scatterer existing in a communication link between the base station and the terminal may be found based on beams formed by the base station and the terminal. The base station may find scatterer-VR combinations for respective scatterers. Thereafter, by selecting a scatterer-VR combination having the largest RSRP among possible scatterer-VR combinations, an optimal beam of the base station and an optimal beam of the terminal may be found.

Hereinafter, based on the contents described in FIG. 9 and FIG. 10, a procedure for sensing scatterers that may exist in a communication path between a terminal and a base station in an XL-MIMO system according to the present disclosure is described.

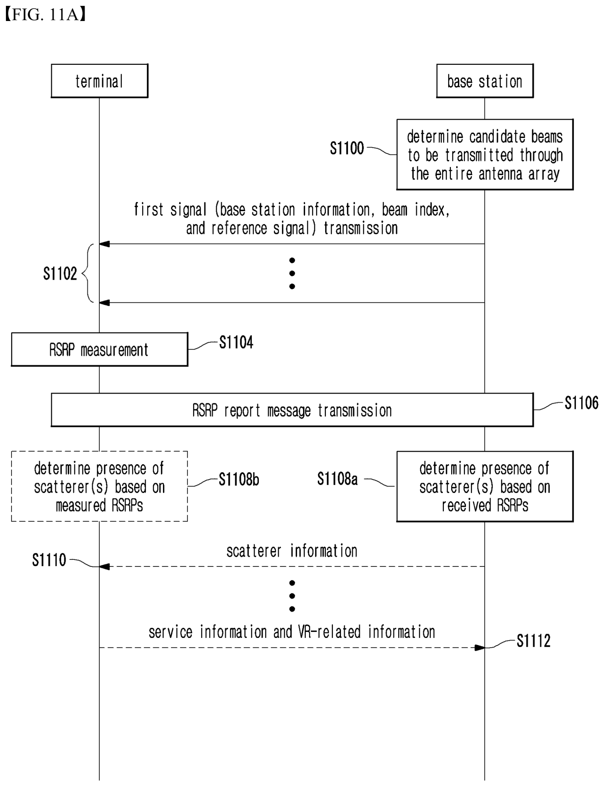

FIG. 11A is a sequence chart according to a first exemplary embodiment for detecting scatterers existing in a communication path between a base station and a terminal.

A terminal and a base station illustrated in FIG. 11A may correspond to the terminal and the base station described above with reference to FIG. 9 and FIG. 10.

In step S1100, the base station may determine candidate beams for transmitting signals through the entire antenna array of the XL-MIMO antenna panel. In other words, the base station may calculate the number of candidate beams that can be beam-swept using the entire antenna array of the XL-MIMO antenna panel. Since step S1100 is before scatterer sensing, when the base station forms a beam using the entire antenna array of the XL-MIMO antenna panel, the base station may form a relatively wide beam. Therefore, when beamforming is performed using the entire antenna array of the XL-MIMO antenna panel, the base station may use a relatively small number of beams. In the following exemplary embodiment, it is assumed that the number of candidate beams for transmitting signals through the entire antenna array of the XL-MIMO antenna panel is 6, for the sake of convenience of understanding. However, it should be noted that this is merely for convenience of description and is not limited thereto.

In step S1102, the base station may perform beam sweeping for respective candidate beams determined using the entire antenna array of the XL-MIMO antenna panel and may transmit a first signal to terminal(s) through the swept beams. In this case, each candidate beam may be transmitted to one terminal or may be transmitted to multiple terminals. Since the candidate beams are transmitted before scatterer sensing as described above, the base station may form relatively wide beams using the entire antenna array of the XL-MIMO antenna panel.

As the first signal transmitted through respective candidate beams, a signal such as a synchronization signal block (SSB) used in the 5G NR may be used. If SSB is not used, in order to perform a procedure similar to an initial beam establishment process, the base station may configure a new reference signal (RS) and may transmit the new RS by including it in the first signal. Therefore, the first signal transmitted through respective candidate beams may include base station information, the new RS, and base station beam index information (or, beam index value). The base station information may include information for identifying the base station. The RS may be a signal known in advance between the base station and the terminal to measure a reception signal strength. In the present disclosure, both a signal using the new RS and a signal such as an SSB will be collectively referred to as the first signal.

In order to identify respective base station beams, a different base station beam index may be configured for each beam of the first signal. For example, the base station may transmit the first signal through a beam having base station beam index #1 at a first time (or a first slot or a first symbol), may transmit the first signal through a beam having base station beam index #2 at a second time (or a second slot or a second symbol), and may transmit the first signal through a beam having base station beam index #3 at a third time (or a third slot or a third symbol). In this case, the base station beam index included in the first signal transmitted at the first time may be base station beam index #1, the base station beam index included in the first signal transmitted at the second time may be base station beam index #2, and the base station beam index included in the first signal transmitted at the third time may be base station beam index #3. In other words, in step S1102, the first signals transmitted through beam sweeping may include identical information except for different beam indexes. If the number of candidate beams that can be transmitted by the base station using the entire antenna array of the XL-MIMO antenna panel is assumed to be n, the base station may transmit the first signal to the terminal through beams from a beam having base station beam index #1 to a beam having base station beam index #n.

In step S1102, the terminal may receive the first signal by sweeping multiple terminal beams. The terminal may obtain base station information, RS, and base station beam index information from the received first signal. In this case, the terminal may identify a terminal beam through which the first signal is received using a terminal beam index configured by the terminal. For example, if the number of beams that can be beam-swept by the terminal is assumed to be m, the terminal may beam-sweep the m beams sequentially to receive the first signal transmitted by the base station. In other words, during beam sweeping, the terminal may sequentially beam-sweep beams from terminal beam index #1 to terminal beam index #m to receive the first signal transmitted by the base station.

In step S1104, the terminal may measure an RSRP of the RS included in the received first signal. As described above, it is assumed that the base station configures 6 base station beams using the entire antenna array of the XL-MIMO antenna panel. Therefore, the base station may transmit the first signal through beams having base station beam indexes #1 to #6, and the terminal may receive each of the beams having base station beam indexes #1 to #6. The terminal may also receive base station beams by beam-sweeping multiple candidate beams that can be formed by the terminal. Therefore, the terminal may map the base station beams and the terminal beams using base station beam indexes and terminal beam indexes. The terminal may also map measured RSRP values to respective beam pairs. If the number of candidate beams of the terminal is assumed to be 6, the mapping between respective beam pairs and measured RSRP values may be illustrated as in Table 2 below.

[Table 2]

| Base station beam index | Terminal beam index | RSRP measurement value |
|---|---|---|
| base station beam index #1 | terminal beam index #1 | RSRP_106 |
| ... | ... | ... |
| base station beam index #1 | terminal beam index #6 | RSRP_45 |
| base station beam index #2 | terminal beam index #1 | RSRP_90 |
| ... | ... | ... |
| base station beam index #6 | terminal beam index #6 | RSRP_95 |

Referring to Table 2, RSRP measurement values of the first signals received using terminal beams from terminal beam index #1 to terminal beam index #6 may be mapped to base station beam index #1, and the same mapping scheme may be applied to base station beam indexes #2 to #6 as in base station beam index #1. In Table 2, for convenience of description, a case of using 6 base station beams and 6 terminal beams is assumed. However, the number of base station beams and/or the number of terminal beams may be greater or fewer. The terminal may map and store beam pairs and RSRP measurement values corresponding to the respective beam pairs as shown in Table 2.

In step S1106, the terminal may generate an RSRP report message including information such as Table 2 and may transmit the RSRP report message to the base station. In this case, a beam through which the terminal transmits the RSRP report message may be determined in various manners. Since a transmission time of the report message in step S1106 is before scatterer sensing, the terminal may not be able to determine through which beam the RSRP report message needs to be transmitted. Therefore, the terminal may sequentially transmit the RSRP report message through all beams that can be formed by the terminal (by beam sweeping). As another example, the terminal may select one beam among beams that can be formed by the terminal, and if a response signal to the RSRP report message is not received within a certain time after transmitting the RSRP report message through the selected beam, the terminal may retransmit the RSRP report message by selecting another beam.

Meanwhile, in FIG. 11A, an example in which RSRP measurement values for the first signals are transmitted through one RSRP report message is illustrated. However, the terminal may also be configured to transmit the RSRP report message each time the first signal is received, or at a certain time after transmission of a predetermined number of slots of the first signal.

For example, the terminal may receive a beam having base station beam index #0 through a specific terminal beam and may transmit an RSRP value, measured for an RS included in the beam corresponding to base station beam index #0, to the base station along with information regarding the beam pair corresponding to the measured RSRP.

As another example, when the first signals are continuously transmitted in predetermined specific slot(s) through a beam corresponding to base station beam index #0, the terminal may measure RSRP values of the first signals received in the corresponding slot(s), and at a time of RSRP measurement reporting, the terminal may transmit the beam pairs and RSRP values corresponding to the respective beam pairs to the base station by including them in an RSRP report message.

In addition, the present disclosure allows the terminal to report performance (e.g., a beam pair and a corresponding RSRP value) for one base station transmission beam to the base station. As another example, when the terminal supports group-based beam reporting, the terminal may receive multiple beams simultaneously from the base station. The terminal supporting group-based beam reporting may also simultaneously perform reporting for the respective multiple beams received simultaneously.

Meanwhile, the procedure of steps S1102 to S1106 described above has been described on the assumption of operation between one terminal and one base station. However, multiple terminals may exist in a cell of the base station. Therefore, information such as Table 2 or various forms and methods for RSRP reporting as described above may equally apply to respective terminals belonging to the base station.

In step S1106, the base station may receive the RSRP report message(s) from the terminal(s) through at least one of the beams formed in step S1102.

In step S1108a, the base station may determine presence of scatterer(s) based on the received RSRP values. In step S1108b, the terminal may also determine presence of scatterer(s) based on the measured RSRP values. The determination of presence of a scatterer may be performed by comparing the measured values with a scatterer RSRP threshold to determine whether a scatterer exists in a specific path.

Therefore, the scatterer RSRP threshold may be a predetermined value for determining whether a scatterer exists. The scatterer RSRP threshold may be determined considering a Line-of-Sight (LoS) path between the base station and the terminal and all possible cases where beams may additionally reach. The possible cases where beams may additionally reach may include additional propagation paths caused by reflection, diffraction, or refraction. The scatterer RSRP threshold may also be set by comprehensively considering the number of antennas used to transmit a reference signal and the degree of signal attenuation caused by the surrounding environment.

The scatterer RSRP threshold may be transmitted by the base station in advance to the terminal. For example, the scatterer RSRP threshold may be transmitted to the terminal through at least one of a system information block (SIB), downlink control information (DCI), medium access control (MAC) control element (CE), and/or radio resource control (RRC) signaling. In another manner, the scatterer RSRP threshold may be transmitted by being included in the first signal according to the present disclosure.

Therefore, the terminal and the base station may determine presence of a scatterer in a specific path using the scatterer RSRP threshold. If the base station does not transmit the scatterer RSRP threshold to the terminal, step S1108b may be omitted. Step S1108b is indicated by a dotted line to show that it may be omitted.

A method of confirming whether a scatterer exists using the scatterer RSRP threshold is described. The base station may acquire RSRP values measured for base station beam-terminal beam pairs from the RSRP measurement report message such as that described above with reference to Table 2. Therefore, if a measured RSRP value is greater than the scatterer RSRP threshold, it may be determined that a scatterer exists in a path of a corresponding beam pair.

A method of determining presence of a scatterer is described through a specific example. First, as assumed in Table 2, a case is assumed where the base station is able to form 6 beams using the entire antenna elements of the XL-MIMO antenna panel, and the terminal receives the first signals from the base station using 6 terminal beams. It is also assumed that the beams formed by the base station are identified as base station beam indexes #1 to #6, and the beams formed by the terminal are identified as terminal beam indexes #1 to #6. This may be the same assumption as in Table 2 illustrated above.

Taking base station beam index #1 as an example, beam pairs reported from the terminal and measured RSRP values thereof may be illustrated as follows.

(1) Base station beam index #1 - Terminal beam index #1: RSRP_#11
(2) Base station beam index #1 - Terminal beam index #2: RSRP_#12

(3) Base station beam index #1 - Terminal beam index #3: RSRP_#13
(4) Base station beam index #1 - Terminal beam index #4: RSRP_#14
(5) Base station beam index #1 - Terminal beam index #5: RSRP_#15
(6) Base station beam index #1 - Terminal beam index #6: RSRP_#16

In (1) to (6), "RSRP_#AB" may be a specific value, where 'A' identifies the base station beam index and 'B' identifies the terminal beam index, in order to indicate a relationship with the corresponding beam pair.

Therefore, the base station may identify through comparison whether at least one among RSRP_#11 to RSRP_#16 exceeds the scatterer RSRP threshold. If all of RSRP_#11 to RSRP_#16 are equal to or less than the scatterer RSRP threshold, it may be determined that no scatterer exists for base station beam index #1. On the other hand, if at least one among RSRP_#11 to RSRP_#16 exceeds the scatterer RSRP threshold, it may be determined that a scatterer exists in a path of a beam pair corresponding to the corresponding RSRP value.

Taking base station beam index #3 as an example, beam pairs reported from the terminal and measured RSRP values thereof may be illustrated as follows.

(1) Base station beam index #3 - Terminal beam index #1: RSRP_#31
(2) Base station beam index #3 - Terminal beam index #2: RSRP_#32
(3) Base station beam index #3 - Terminal beam index #3: RSRP_#33
(4) Base station beam index #3 - Terminal beam index #4: RSRP_#34
(5) Base station beam index #3 - Terminal beam index #5: RSRP_#35
(6) Base station beam index #3 - Terminal beam index #6: RSRP_#36

Similarly to the above example, for base station beam index #3, the presence of a scatterer may be determined by confirming whether there exists an RSRP value exceeding the scatterer RSRP threshold. In this case, there may exist a case where RSRP_#33 and RSRP_#34 exceed the scatterer RSRP threshold. In such a case, one beam pair having a higher RSRP value among RSRP_#33 and RSRP_#34 may be selected. For example, when RSRP_#34 has a greater value than RSRP_#33, a beam pair corresponding to RSRP_#34 may be selected.

Through such a method, the base station and the terminal, respectively, may determine that a scatterer exists in a specific beam pair, that is, on a specific path. A case in which three scatterers exist through the inspection as described above may be illustrated as shown in Table 3 below.

[Table 3]

| Scatterer | Base station beam | Terminal beam |
|---|---|---|
| scatterer #1 | base station beam index #1 | terminal beam index #1 |
| scatterer #2 | base station beam index #3 | terminal beam index #4 |
| scatterer #3 | base station beam index #5 | terminal beam index #6 |

According to the example in Table 3, a case is illustrated in which scatterer #1 exists on a communication path between base station beam index #1 and terminal beam index #1, scatterer #2 exists on a communication path between base station beam index #3 and terminal beam index #4, and scatterer #3 exists on a communication path between base station beam index #5 and terminal beam index #6. This may correspond to a case where a value of RSRP_#11 corresponding to the pair of base station beam index #1 and terminal beam index #1 is greater than a scatterer RSRP threshold, a case where a value of RSRP_#34 corresponding to the pair of base station beam index #3 and terminal beam index #4 is greater than the scatterer RSRP threshold, and a case where a value of RSRP_#56 corresponding to the pair of base station beam index #5 and terminal beam index #6 is greater than the scatterer RSRP threshold.

Meanwhile, when the base station is not able to transmit the scatterer RSRP threshold to the terminal, in step S1110, the base station may transmit scatterer information (i.e., information on the scatterers) to the terminal. The scatterer information may be information such as Table 3 above. When the base station transmits the scatterer information to the terminal, the base station may transmit the scatterer information to the terminal using beams in which the scatterers detected in Table 3 exist or using at least one of the beams in which scatterers exist. In another method, the base station may transmit the scatterer information to the terminal using all beams. Step S1110 may be omitted when, as described above, the base station has transmitted the scatterer RSRP threshold to the terminal in advance.

In step S1112, the terminal may transmit service information and VR-related information to the base station. The service information and/or the VR-related information may be used in a hierarchical VR estimation technique in the XL-MIMO system to be described in Section [2] later and in a beam selection procedure to be described in Section [3] later. The service information may be, for example, information such as latency requirement information. In other words, the service information may include information on a sensitivity regarding delay for a service that the terminal desires to be provided and/or information on a grade of the service. The VR-related information may include information indicating whether the terminal supports a VR estimation process to be described later in the present disclosure and information on the number of beams that can be formed simultaneously by the terminal.

Meanwhile, in the above exemplary embodiment, the case has been described in which the base station transmits RS to the terminal through beam sweeping and senses scatterer(s). However, an operation in which the terminal transmits an RS in a beam sweeping manner and the base station receives the RS from the terminal to determine the presence of scatterer(s) may also be performed in a similar manner.

Since base station beams used in the scatterer sensing process illustrated in FIG. 11A are transmitted in a state where information on VR is absent, the process of forming beams through the entire antenna array is required. Since the XL-MIMO system has a very large number of antenna elements (or antenna arrays), computational complexity of the process in which the base station transmits beams may be very high. Therefore, when the XL-MIMO system is used in the future, it may be difficult to perform an initial beam establishment process in a manner in which the base station transmits SSB and the terminal receives the SSB, as in the current 5G NR standard.

In order to solve such a problem, the present disclosure additionally proposes an RSRP measurement method based on uplink transmission rather than the RSRP measurement method based on downlink transmission from the base station to the terminal. In other words, by the terminal transmitting uplink beams and the base station measuring RSRPs of the uplink beams, an initial beam establishment procedure may be performed.

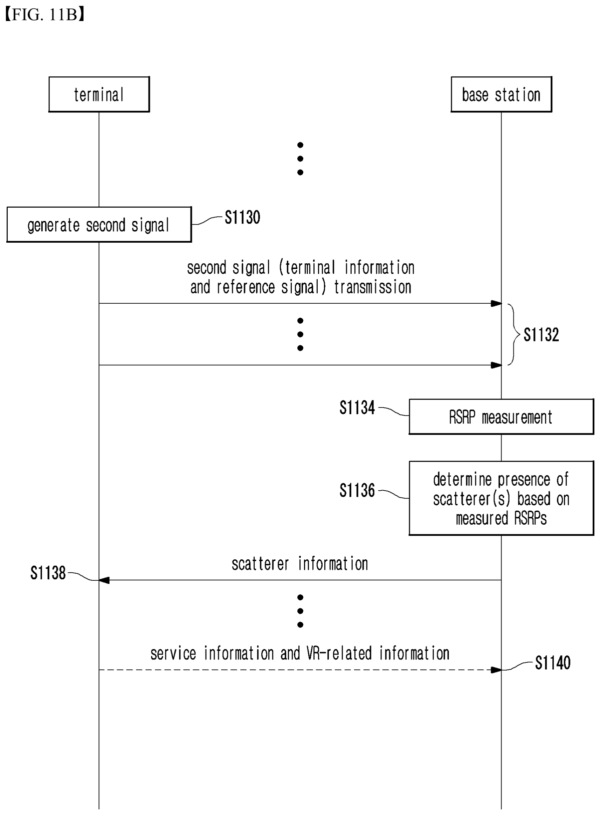

FIG. 11B is a sequence chart according to a second exemplary embodiment for detecting scatterers existing in a communication path between a base station and a terminal.

A terminal and a base station illustrated in FIG. 11B may correspond to the terminal and the base station described above with reference to FIG. 9 and FIG. 10. In the present disclosure, a method of sensing scatterers on a communication path between the base station having an XL-MIMO antenna panel and the terminal is described.

In step S1130, the terminal may generate a second signal to be transmitted to the base station. The second signal may be generated when the terminal needs communication with the base station. Therefore, the terminal may be in an initial access stage, may be in an RRC idle state, or may be in an RRC inactive state with the base station.

The second signal generated by the terminal in step S1130 may include terminal information and a reference signal (RS). For example, the terminal information may include at least one of a transmission beam identifier or a terminal identifier. A reason for including the terminal identifier in the second signal is to allow the base station to identify the terminal because multiple terminals may perform uplink transmission. When the second signal is transmitted exclusively for a specific terminal, the second signal may be configured not to include the terminal identifier.

The terminal identifier may be configured in various forms. For example, when the terminal is in the RRC connected state, a terminal identifier allocated from the network may be used. As another example, when a terminal identifier is not allocated from the network to the terminal, a unique ID of the terminal, for example, all or part of an International Mobile Subscriber Identity (IMSI), may be used. As another example, when the terminal is not allocated a terminal identifier from the network, the terminal may randomly select a sequence among predetermined sequences and may allow the terminal to be identified through the selected sequence. When a sequence among sequences commonly usable by terminals is used in this manner, a collision resolution procedure in consideration of collision with another terminal may further be required. In addition, in the present disclosure, no special restriction is placed on other methods capable of identifying the terminal.

In step S1132, the terminal may transmit the second signal in uplink through multiple beams in a beam sweeping manner. As described above with reference to FIG. 11A, the second signal transmitted in uplink may be configured to differ only in a beam identifier for identifying a transmitted beam. In step S1132, the base station may receive the second signal in a beam sweeping manner or through a specific beam. The base station may receive the beam(s) by performing beam sweeping using the entire antenna array of the XL-MIMO antenna panel. Therefore, in the case of FIG. 11A, the base station performs beam sweeping for transmission of the first signal, whereas in the case of FIG. 11B, the base station performs beam sweeping for reception of the second signal.

In step S1134, the base station may measure the RS included in the second signal received from the terminal and may acquire an RSRP. The base station may map and store beam pairs in a form such as Table 2 described above and measured RSRP values corresponding to respective beam pairs.

In step S1136, the base station may compare the measured RSRP values with the scatterer RSRP threshold and may find terminal beams exceeding the scatterer RSRP threshold. In this case, a terminal beam index of the terminal may be interpreted as having a role similar to an SSB index used in the SSB-based initial beam establishment process of the 5G NR standard. The base station may acquire information on beam pairs exceeding the scatterer RSRP threshold. Since such a procedure may be performed in the same manner as the scatterer finding procedure of Table 3 described above with reference to FIG. 11A, a redundant description is omitted. In other words, the base station may obtain information on scatterers such as Table 3 and information on the corresponding beam pairs.

In step S1138, the base station may transmit scatterer information on scatterers acquired as in Table 3 to the terminal. The information on base station beams in the scatterer information may not be necessary at the terminal. When the base station beam information is unnecessary, only terminal beam indexes and RSRP values measured at the base station corresponding to the terminal beam indexes in the scatterer information may be transmitted as the scatterer information without base station beam indexes. The terminal may also not require the RSRP values measured at the base station. In this case, the scatterer information of FIG. 11B may be composed only of terminal beam indexes. The beam used to transmit the scatterer information may be beam-swept using the entire antenna array of the XL-MIMO antenna panel, or at least one beam among beams acquired as in Table 3 may be used.

In step S1138, the terminal may receive the scatterer information from the base station. The terminal may confirm that three scatterers exist in the communication path between the base station and the terminal based on the scatterer information received from the base station, and may identify terminal beams and base station beams corresponding to the respective scatterers.

In step S1140, the terminal may transmit service information and VR-related information to the base station. The service information and/or the VR-related information may be information such as that described in step S1112 of FIG. 11A. In other words, the service information and/or the VR-related information may be used in a hierarchical VR estimation technique in the XL-MIMO system to be described in Section [2] later and in a beam selection procedure to be described in Section [3] later. For example, the service information may include information such as latency requirement information. In other words, the service information may include information on a sensitivity regarding delay for a service that the terminal desires to be provided and/or information on a grade of the service. The VR-related information may include information indicating whether the terminal supports a VR estimation process to be described later in the present disclosure and information on the number of beams that can be formed simultaneously by the terminal.

[2]. Hierarchical VR estimation method

In a hierarchical VR estimation technique in the XL-MIMO system, VRs corresponding to the respective scatterers may be estimated based on the scatterer information identified in the process of sensing scatterers existing in the communication link between the base station and the terminal in the XL-MIMO system.

Before performing the VR estimation process, the base station may receive information such as latency requirement information and/or information indicating whether the VR estimation process is supported from the terminal. The information such as latency requirement information and/or information indicating whether the VR estimation process is supported may be performed in the same manner as described in the last step of Section [1] above or may be performed in the first step of the hierarchical VR estimation method described in Section [2].

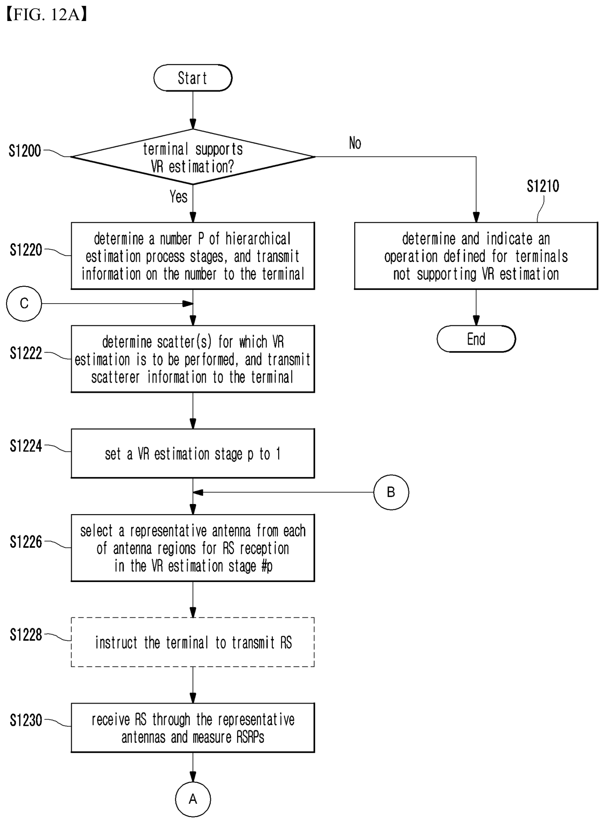

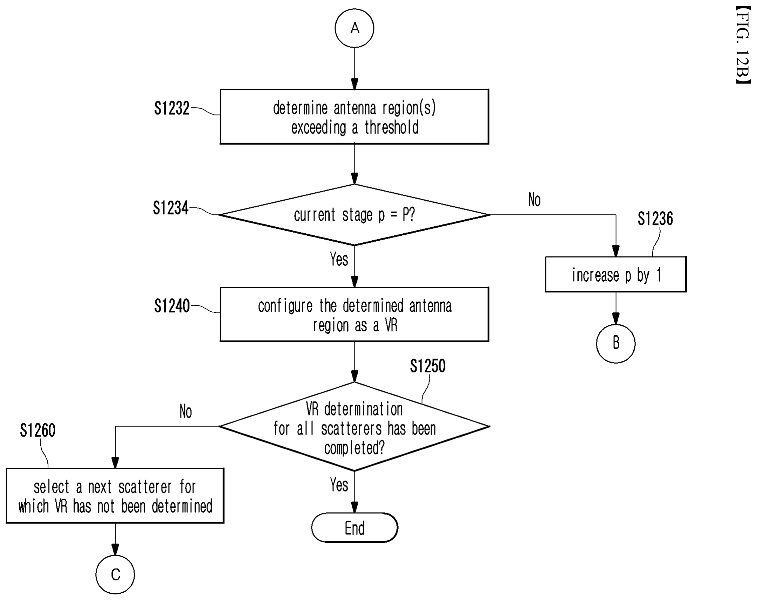

FIG. 12A is a partial flowchart illustrating an operation for hierarchical VR estimation in a base station, and FIG. 12B is a remaining part of the flowchart illustrating the operation for hierarchical VR estimation in the base station.

In FIG. 12A and FIG. 12B, an operation of the base station is described. When the base station transmits a specific signal (or message or information) to the terminal, the terminal may receive the signal (or message or information) transmitted by the base station. When the base station receives a specific signal (or message or information) from the terminal, the terminal may generate the specific signal and may perform an operation of transmitting the signal to the base station.

In step S1200, the base station may determine whether the terminal supports VR estimation based on the service information and/or VR-related information received in step S1112 of FIG. 11A in Section [1] above or based on the service information and/or VR-related information received in step S1140 of FIG. 11B. When the terminal supports VR estimation, the base station may perform step S1220, and when the terminal does not support VR estimation, the base station may perform step S1210.

In step S1210, the base station may determine to perform an operation defined for terminals not supporting VR estimation and may perform an operation according to the determination. The base station may transmit a signal including operation indication information for terminals not supporting VR estimation to the terminal. For example, the operation indication information may include information for restricting communication with the XL-MIMO system to the terminal not supporting VR estimation. In another example, the operation indication information may indicate a beam pre-allocated by the base station for the terminal not supporting VR estimation. Since resource consumption is very high when proceeding with a beam management process with the terminal not supporting VR estimation, assigning the beam preconfigured by the base station may prevent such an inefficient beam management procedure.

Step S1220 may be performed when the terminal supports VR estimation. Therefore, in step S1220, the base station may determine a number of stages of a hierarchical estimation process by comprehensively considering information such as latency requirement information of the terminal received from the terminal and the number of antenna ports that can be simultaneously transmitted and received at the base station. A case of using factors used to determine a number of VR estimation stages is described as an example.

The base station may determine the number of VR estimation stages based on latency requirements of the terminal. When the latency requirement of the terminal is short, and the terminal requires short delay, the base station may need to perform VR estimation quickly. Therefore, the base station may configure a small number of VR estimation stages. As another example, the fewer the number of antenna ports that can be simultaneously used for transmission and reception at the base station, the fewer the number of representative antennas of VR candidates that can be simultaneously transmitted and received at each VR estimation stage. Therefore, the base station may subdivide the VR estimation process to configure a larger number of VR estimation stages as the number of antenna ports that can be simultaneously transmitted and received at the base station decreases. By comprehensively determining such matters, the base station may determine VR estimation stages.

Information on the number of VR estimation stages determined based on the method described above may be illustrated as in Table 4 below.

[Table 4]

| Support for VR estimation process | True |
|---|---|
| The number VR estimation stages | 2 |

In step S1220, the base station may transmit information on the number of stages of the hierarchical estimation process determined as in Table 4 to the terminal. The information on the number of stages of the hierarchical estimation process may be transmitted to the terminal through SIB, DCI, or RRC signaling.

The terminal may receive the information on the number of stages of the hierarchical estimation process such as Table 4 from the base station. When the information such as Table 4 is transmitted, when 'support for VR estimation process' is set to 'True', 'the number of VR estimation stages' may be valid. On the other hand, when 'support for VR estimation process' is set to 'False', 'the number of VR estimation stages' may be ignored even if it exists. When the information on the number of VR estimation stages is transmitted only in a case where the VR estimation process is supported, as predefined in the specification, 'support for VR estimation process' in Table 4 may not be included. The terminal may confirm VR estimation stages by receiving the message including the information such as Table 4 or including only information on the number of VR estimation stages.

Meanwhile, the base station may also dynamically change the number of stages of the VR estimation process according to an amount of total traffic generated in communication with the terminal. When the base station dynamically adjusts the number of stages of the VR estimation process, the number of VR estimation stages may be actively adjusted through indication in a DCI format, or may be variably configured within a maximum number of VR estimation stages supported by the terminal through MAC-CE or RRC signaling.

Hereinafter, for convenience of description, a case in which VR estimation is performed in two stages as shown in Table 4 is assumed.

In step S1222, the base station may determine scatterers for which VR estimation is to be performed. Hereinafter, for description, a case in which three scatterers are detected in the scatterer sensing procedure as described above in Table 3 is assumed. However, a method described below may be equally applied even when the number of scatterers detected in the scatterer sensing procedure is two, four, or more. In addition, hereinafter, for convenience of description, a case is assumed in which VR estimation for scatterers is performed in an order of scatterer #1, scatterer #2, and scatterer #3. However, since the terminal does not know which scatterer to start VR estimation with, the base station may transmit information on scatterers for VR estimation to the terminal in step S 1222. When the number of scatterers detected in the scatterer sensing procedure is one, step S 1222 may be omitted.

In the example of FIG. 12, the case in which the number of stages of the hierarchical estimation process and scatterer information are respectively transmitted to the terminal in steps S1220 and S1222 is illustrated. However, the number of stages of the hierarchical estimation process and the scatterer information may be transmitted to the terminal by the base station at once.

In step S1224, the base station may set a VR estimation stage variable p to 1. This may correspond to a step for identifying that the current estimation stage is the first stage.

In step S1226, the base station may divide antennas into antenna regions to receive signals from the terminal in the VR estimation stage #p, and may select a representative antenna from each of the divided antenna regions. When the base station first performs VR estimation in step S1226, it may correspond to the VR estimation stage #1. The VR estimation stage #1 may be the first procedure for VR estimation after the base station performs scatterer sensing as in FIG. 11A or FIG. 11B. Accordingly, the base station may divide all antennas of the XL-MIMO antenna panel into a predetermined number of regions. The base station may select a representative antenna for each of the divided antenna regions. The representative antenna may be one antenna element, or may be a small antenna panel.

A case in which all antennas of the XL-MIMO antenna panel are divided into a predetermined number of regions in the VR estimation stage #1 is described with reference to the accompanying drawings.

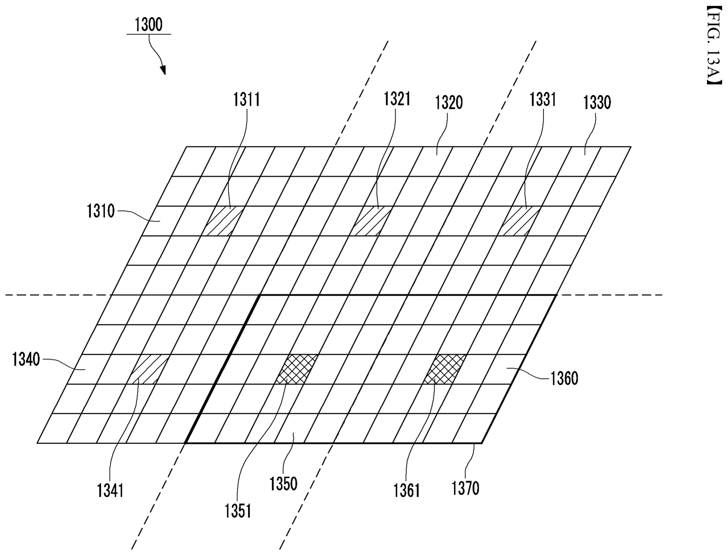

FIG. 13A is a conceptual diagram illustrating antenna region division for an entire antenna array of an XL-MIMO antenna panel and configuration of a representative antenna for each region.

As shown in FIG. 13A, an entire antenna array 1300 of an XL-MIMO antenna panel is illustrated. In the example of FIG. 13A, the entire antenna array 1300 is divided into six regions of a first region 1310, a second region 1320, a third region 1330, a fourth region 1340, a fifth region 1350, and a sixth region 1360. In addition, each of the regions 1310 to 1360 is illustrated as being composed of 25 antennas (or antenna panels).

As described above, since the entire antenna array 1300 of the XL-MIMO antenna panel illustrated in FIG. 13A is installed on walls of stadiums, shopping malls, and the like, it is actually composed of a very large number of antenna elements. Accordingly, the six regions illustrated in FIG. 13A may also be considerably large regions.

The regions 1310, 1320, 1330, 1340, 1350, and 1360 illustrated in FIG. 13A may correspond to a configuration in which the entire antenna array 1300 of the XL-MIMO antenna panel is divided into upper and lower halves. The upper half may be divided into three equal parts: a first region 1310, a second region 1320, and a third region 1330, and the lower half may be divided into three equal parts: a fourth region 1340, a fifth region 1350, and a sixth region 1360. In FIG. 13A, for convenience of description, the case in which the array is divided into six regions is illustrated, but the array may be divided into more regions or fewer regions. In addition, the manner of dividing the regions illustrated in FIG. 13A is merely an example, and the present disclosure is not limited thereto.

In step S1226, the base station may select representative antennas 1311, 1321, 1331, 1341, 1351, and 1361 from the divided regions 1310 to 1360, respectively. In the example of FIG. 13A, a case in which an antenna located at the center of each region is selected is illustrated. However, the representative antenna may be configured in various manners, such as the first antenna at the uppermost left side, the first antenna at the uppermost right side, or an arbitrary antenna, instead of being located at the center of each region.

In step S1228, the base station may instruct the terminal to transmit a reference signal (RS). The RS transmission instruction may be transmitted to the terminal through terminal-specific higher layer signaling. The RS transmission instruction may include information on an RS transmission time and an RS transmission periodicity, and may indicate which beams to use. Referring specifically to Table 3 described above, in a case of a VR estimation stage for scatterer #1, a beam of terminal beam index #1 needs to be used by the terminal, and in a case of a VR estimation stage for scatterer #2, a beam of terminal beam index #4 needs to be used by the terminal, and in a case of a VR estimation stage for scatterer #3, a beam of terminal beam index #6 needs to be used by the terminal. The base station may transmit such information to the terminal through higher-layer signaling. The base station may transmit higher-layer signaling during each scatterer measurement, or may include information such as periodicities, transmission times, the total number of transmissions, and beam index information of RSs to be transmitted for VR measurements for all scatterers.

In another example, the RS transmission instruction may be indicated by DCI whenever RS reception from the terminal is required. In this case, the DCI may indicate a beam index (or scatterer information) to be used by the terminal and a transmission time. When the terminal is instructed through higher layer signaling to transmit RS at a certain time, a separate transmission may be performed at a specific time.

In step S1230, the base station may receive RSs transmitted by the terminal through the representative antennas. The RS received from the terminal may be a sounding reference signal (SRS). In another example, the RS received from the terminal may be an RS newly defined according to the present disclosure for VR estimation at the base station. The present disclosure does not impose a particular restriction on which type of RS is used.

The base station may also measure an RSRP for the received RS. An RSRP value measured for each representative antenna at the base station may be mapped to the corresponding antenna and stored in memory. An example of mapping of each representative antenna and measured RSRP value may be illustrated as in Table 5 below.

[Table 5]

| Representative antenna of VR candidate #1 | RSRP measurement value |
|---|---|
| A #1-1 | RSRP_35 |
| A #1-2 | RSRP_62 |
| A #1-3 | RSRP_69 |
| A #1-4 | RSRP_65 |
| A #1-5 | RSRP_85 |
| A #1-6 | RSRP_97 |

In Table 5, a VR candidate #1 may be, for example, a candidate of a VR path corresponding to scatterer #1. In addition, in Table 5, A #1-1 may correspond to the representative antenna 1311 of the first region 1310 described in FIG. 13A, A #1-2 may correspond to the representative antenna 1321 of the second region 1320 described in FIG. 13A, A #1-3 may correspond to the representative antenna 1331 of the third region 1330 described in FIG. 13A, A #1-4 may correspond to the representative antenna 1341 of the fourth region 1340 described in FIG. 13A, A #1-5 may correspond to the representative antenna 1351 of the fifth region 1350 described in FIG. 13A, and A #1-6 may correspond to the representative antenna 1361 of the sixth region 1360 described in FIG. 13A.

The RSRP values measured at the respective representative antennas for the regions may be mapped together with corresponding antennas and stored as shown in Table 5.

In step S1232, the base station may compare the RSRP values measured for the respective representative antennas with a preset threshold. Hereinafter, for convenience of description, the preset threshold is referred to as a 'first stage threshold for VR estimation'. As described above, VR estimation may be performed through one or more stages. Therefore, thresholds for VR estimation may be set for respective stages. The thresholds set for respective stages may have the same value or different values. In addition, the scatterer RSRP threshold described in the scatterer sensing procedure may be the same as or different from the stage thresholds.

The base station may find representative antennas having RSRP values greater than the first stage threshold for VR estimation through the comparison. Accordingly, the base station may determine antenna regions having RSRP values greater than the first stage threshold for VR estimation. The representative antennas determined based on the measured RSRP values and the threshold as shown in Table 5 may be illustrated as in Table 6 below.

[Table 6]

| First stage threshold for VR estimation | RSRP_80 |
| --- | --- |
| First stage VR candidate representative antenna(s) exceeding the first stage threshold for VR estimation | A #1-5, A #1-6 |

According to Table 6, a case in which the first stage threshold for VR estimation is set to RSRP_80 is illustrated. In general, the first stage threshold may require an RSRP higher than the scatterer RSRP threshold described above.

The base station that obtains first stage VR candidate representative antennas exceeding the first stage threshold for VR estimation as in Table 6 may configure all antennas in the region(s) including the corresponding representative antennas as VR candidate antennas. This is described with reference to FIG. 13A as follows.

According to FIG. 13A, the representative antennas 1311, 1321, 1331, 1341, 1351, and 1361 are selected from the first region 1310 to the sixth region 1360, respectively, and according to Table 6, the representative antenna 1351 of the fifth region 1350 and the representative antenna 1361 of the sixth region 1360 may be antennas having RSRP values equal to or greater than the first stage threshold for VR estimation. Accordingly, in step S1232, the base station may configure a first VR candidate region 1370 including the fifth region 1350 and the sixth region 1360 as a region for the second stage VR estimation.

In step S1234, the base station may determine whether the current VR estimation stage variable p is the same as the number P of stages of the hierarchical estimation process determined in step S1220. As a result of the determination in step S1234, the fact that the current VR estimation stage variable p is not the same as the number P of stages of the hierarchical estimation process determined in step S1220 may mean that an additional VR estimation needs to be performed. Therefore, when an additional VR estimation needs to be performed, the base station may proceed to step S1236, and when the current VR estimation stage variable p is the same as the number P of stages of the hierarchical estimation process determined in step S1220, the base station may proceed to step S1240.

When proceeding to step S1236, the base station may increase the value of p by 1, and may proceed to step S1226. Since the initial value of p was set to 1, the value of p may be set to 2 in the second VR estimation stage.

When the base station performs only one VR estimation stage without performing two or more VR estimation stages, the base station may configure the first VR candidate region 1370 as a VR in step S1240. Since the present disclosure assumes the case in which the VR estimation is performed in two stages, a case in which the process returns to step S1226 is described first.

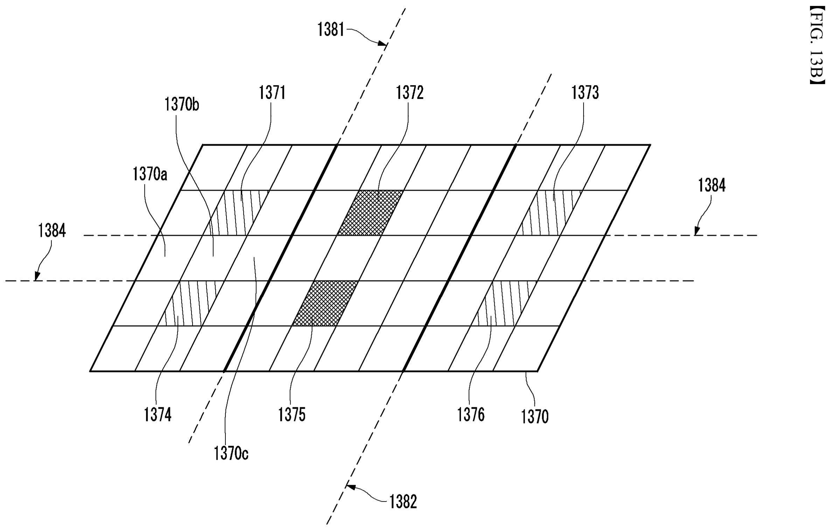

In step S1226, to perform the second stage of VR estimation, the base station may again divide antennas into antenna regions for RS reception, and may select representative antennas for the respective regions. This is described with reference to FIG. 13B.

FIG. 13B is a conceptual diagram illustrating a procedure of dividing an antenna array and selecting representative antennas in the second stage of VR estimation.

An antenna array illustrated in FIG. 13B may correspond to the first VR candidate region 1370 estimated in the first stage of VR estimation described above. Accordingly, the first VR candidate region 1370 may again be divided into a plurality of antenna regions, and representative antennas for the divided antenna regions may be configured.

As shown in FIG. 13B, dotted division lines for dividing the first VR candidate region 1370 are illustrated. A first dotted division line 1381 and a second dotted division line 1382 may be dotted division lines for dividing the first VR candidate region 1370 into three parts along a vertical axis. In addition, a third dotted division line 1383 and a fourth dotted division line 1384 may be dotted division lines for dividing the first VR candidate region 1370 into two parts along a horizontal axis. The base station may again divide the first VR candidate region 1370 into six detailed regions based on criteria such as the division lines 1381 to 1384.

For example, the first VR candidate region 1370 may be composed of a second-first region composed of nine antennas (or antenna panels) centered on a first representative antenna 1371, a second-second region composed of nine antennas (or antenna panels) centered on a second representative antenna 1372, a second-third region composed of nine antennas (or antenna panels) centered on a third representative antenna 1373, a second-fourth region composed of nine antennas (or antenna panels) centered on a fourth representative antenna 1374, a second-fifth region composed of nine antennas (or antenna panels) centered on a fifth representative antenna 1375, and a second-sixth region composed of nine antennas (or antenna panels) centered on a sixth representative antenna 1376.

Then, overlapping antennas 1370a, 1370b, and 1370c may exist according to the third division dotted line 1383 and the fourth division dotted line 1384. In other words, the antennas 1370a, 1370b, and 1370c may be included in the second-first region and may also be included in the second-fourth region. Antennas that are included simultaneously in different regions need not be selected as representative antennas.

In the present disclosure, the case is assumed in which the first VR candidate region 1370 is again divided into six detailed regions as in FIG. 13B and representative antennas for respective detailed regions are selected.

In step S1228, the base station may instruct the terminal to transmit RS. In this case, since this corresponds to a procedure of finding VRs by dividing detailed antenna regions for scatterer #1, the base station may instruct the terminal to transmit RS through terminal beam index #1. In addition, since the method of instructing RS transmission has been described above, a redundant description is omitted.

Accordingly, the terminal may transmit RS through terminal beam index #1 for scatterer #1 detection based on the RS transmission instruction from the base station. The RS transmitted by the terminal may be SRS as described above, or may be another RS.

In step S1230, the base station may receive RSs transmitted by the terminal using the representative antennas 1371 to 1376, and may measure RSRPs for the respective RSs received through the respective representative antennas. RSRP values measured using the respective representative antennas 1371 to 1376 in the second stage of VR estimation may be illustrated as in Table 7 below.

[Table 7]

| Representative antenna of VR candidate #2 | RSRP measurement value |
|---|---|
| A #2-1 | RSRP_48 |
| A #2-2 | RSRP_92 |
| A #2-3 | RSRP_73 |
| ... | ... |
| A #2-6 | RSRP_59 |

In Table 7, the representative antennas of VR candidate #2 may be representative antennas of detailed antenna regions for scatterer #1 in the second stage of VR estimation, as described in FIG. 13B. Accordingly, as illustrated in Table 7, RSRP values measured at the representative antennas of the respective detailed antenna regions may be mapped together with corresponding antennas and stored as shown in Table 7.

Thereafter, in step S1232, the base station may compare the RSRP values measured at the representative antennas for the respective detailed antenna regions with a threshold. Hereinafter, for convenience of description, the threshold to be compared with the RSRP values measured at the representative antennas for the respective detailed antenna regions is referred to as a 'second stage threshold for VR estimation'. The second stage threshold for VR estimation may be an RSRP value greater than the first stage threshold for VR estimation described above. In another example, the second stage threshold for VR estimation may use the same threshold as the first stage threshold for VR estimation described above.

The base station may find representative antennas having RSRP values greater than the second stage threshold for VR estimation through the comparison. Accordingly, the base station may determine antenna regions having RSRP values greater than the second stage threshold for VR estimation. The representative antennas determined based on the RSRP values measured as shown in Table 7 and the threshold may be illustrated as in Table 8 below.

[Table 8]

| Second stage threshold for VR estimation | RSRP_90 |
|---|---|
| Second stage VR candidate representative antenna(s) exceeding the second stage threshold for VR estimation | A #2-2, A #2-5 |

According to Table 8, a case in which the second stage threshold for VR estimation is set to RSRP_90 is illustrated. In general, the second stage threshold may be an RSRP value higher than the first stage threshold described above.

The base station that obtains second stage VR candidate representative antennas exceeding the second stage threshold for VR estimation as in Table 8 may configure all antennas in the region(s) including the corresponding representative antennas as VR candidate antennas. This is described with reference to FIG. 13B as follows.

Referring to the example of Table 8 with reference to FIG. 13B, the representative antenna 1372 of the second-second region and the representative antenna 1375 of the second-fifth region may be representative antennas exceeding the second stage threshold for VR estimation. In FIG. 13B, the second-second region and the second-fifth region including the representative antennas exceeding the second stage threshold for VR estimation may be second VR candidate regions. The second VR candidate region may be a VR candidate region determined as a result of performing the second stage VR estimation.

After determining the second stage VR candidate region as described above, the base station may proceed to step S1234. In step S1234, the base station may determine whether the current VR estimation stage variable p is the same as the number P of stages of the hierarchical estimation process determined in step S1220. As a result of the determination in step S1234, that the current VR estimation stage variable p is not the same as the number P of stages of the hierarchical estimation process determined in step S1220 may mean that an additional VR estimation needs to be performed. Therefore, when an additional VR estimation needs to be performed, the base station may proceed to step S1236, and when the current VR estimation stage variable p is the same as the number P of stages of the hierarchical estimation process determined in step S1220, the base station may proceed to step S1240.

Since the exemplary embodiment of the present disclosure assumes a case of performing a two-stage procedure, and since the second stage of VR estimation has been performed up to now (p = 2), the base station may proceed to step S1240. In step S1240, the base station may configure the second VR candidate region as a VR. The determined VR may be a VR for scatterer #1. Hereinafter, for convenience of description, the determined VR is referred to as a 'VR of scatterer #1'.

As described above, when performing the first stage VR estimation and the second stage VR estimation, in the first stage VR estimation, the first VR candidate region 1370 may be found from the entire antenna array of the XL-MIMO antenna. Accordingly, when performing the first stage VR estimation, antennas usable for selecting a VR for communication with the terminal may select a narrower antenna region compared to the entire antenna array of the XL-MIMO antenna. In addition, when performing the second stage VR estimation, second VR candidate antenna regions (i.e., the second-second region and the second-fifth region) narrower than the first VR candidate antenna region 1370 may be found. Therefore, the more VR estimation stages are performed, the more finely a candidate antenna region may be found.

As the VR estimation stages are repeated, the number of antennas belonging to the same group as the representative antenna of the VR candidate region decreases, and accordingly, an average distance between any one antenna and the representative antenna belonging to the same group becomes smaller. The closer the distance between two different antennas, the smaller the effect due to channel non-stationarity, so that performance of the representative antenna will become more similar to performance of other antennas belonging to the group. Therefore, the representative antenna may be regarded as representing the group more accurately. Since an n-th stage of VR estimation in the hierarchical VR estimation process is based on a result of an (n-1)-th stage of VR estimation, the base station may measure performance more precisely for a narrower VR region.

After step S1240, in step S1250, the base station may determine whether VR determination for all scatterers has been completed. If VR determination for all scatterers has been completed, the base station may terminate the procedure of the flowcharts of FIGS. 12A and 12B. On the other hand, if VR determination for all scatterers has not been completed, the base station may proceed to step S1260.

In step S1260, the base station may select a next scatterer for which a VR has not been determined. The base station may then proceed to step S1222 and perform a stepwise procedure for VR determination for the corresponding scatterer. Since the number of stages of the hierarchical estimation process determined in step S1220 needs to be applied equally to all scatterers, the base station may perform step S1222 after step S1260.

Based on the method described above, the base station may find VRs in the same manner for all scatterers from scatterer #1 to scatterer #3. When finding a VR for scatterer #2, the terminal transmits RS through terminal beam index #4, and when finding a VR for scatterer #3, the terminal transmits RS through terminal beam index #6. Except for this, VRs for respective scatterers may be found by the same procedure as the procedure for finding scatterer #1 described above. VRs for respective scatterers may be determined as shown in Table 9 below.

[Table 9]

| Scatterer | VR |
|---|---|
| scatterer #1 | VR #1 |
| scatterer #2 | VR #2 |
| scatterer #3 | VR #3 |

The VRs found as described above may be understood as follows with reference to FIG. 9 described above. Scatterer #1 may correspond to the first scatterer 920 of FIG. 9, scatterer #2 may correspond to the second scatterer 930 of FIG. 9, and scatterer #3 may correspond to the third scatterer 940 of FIG. 9.

The VRs corresponding to the respective scatterers may be the first group of antenna elements 911, second group of antenna elements 912, and third group of antenna elements 913 of FIG. 9. In other words, VR #1 corresponding to scatterer #1 may be the first group of antenna elements 911, VR #2 corresponding to scatterer #2 may be the second group of antenna elements 912, and VR #3 corresponding to scatterer #3 may be the third group of antenna elements 913.

In the exemplary embodiments described above, a case in which three communication links due to three scatterers exist between the terminal and the base station has been described. However, the number of scatterers may be two or fewer, or may be four or more. Even in such cases, VRs through the respective scatterers may be determined in the same manner based on what has been described above.

The VRs described through the exemplary embodiment of FIG. 9 correspond to a case in which VR #1, VR #2, and VR #3 do not overlap with one another. However, during the VR estimation process, a situation in which two or more different VRs overlap may occur depending on positions of representative antennas and RSRP measurement values.

In addition, in the procedure of determining combinations of respective scatterers and VRs as in Table 9 in the above description, an example is shown in which respective VRs are configured to have the same size as illustrated in FIG. 9. However, the sizes of VR #1, VR #2, and VR #3 may be configured to be different from one another.

When the sizes of VR #1, VR #2, and VR #3 are all matched to be the same, the base station may determine scatterer-VR combinations by also considering antenna efficiency in VR selection. In contrast, when the sizes of VR #1, VR #2, and VR #3 are configured to be different from one another, since there is no constraint on a number of antennas for each VR, the base station may select a scatterer-VR combination that can maximize communication efficiency through a scatterer.

On the other hand, the VR estimation stages described above have described the procedure in which the base station measures RS transmitted through a terminal beam and estimates a VR based on reception performance. However, a case in which the base station transmits RS and the terminal measures the RS and reports a measured value may also be performed in the same form as described above. However, when the terminal measures RS, an additional procedure of reporting information on the measured RS to the base station needs to be performed, and since a procedure for VR estimation is performed at the terminal, performance and complexity of the terminal may increase. In addition, when the base station transmits RS and the terminal performs a VR estimation stage, since the base station may transmit RS using a narrower beam than a beam of the terminal, there is an advantage that a VR is configured more finely.

[3]. Method of selecting base station beams and terminal beams in an XL-MIMO system

Based on the above description, after finding VR(s), beams to be used for actual communication between the base station and the terminal may be selected. In the present disclosure described below, a procedure of selecting a pair of a base station beam and a terminal beam to be used for communication in the VR(s) is described.

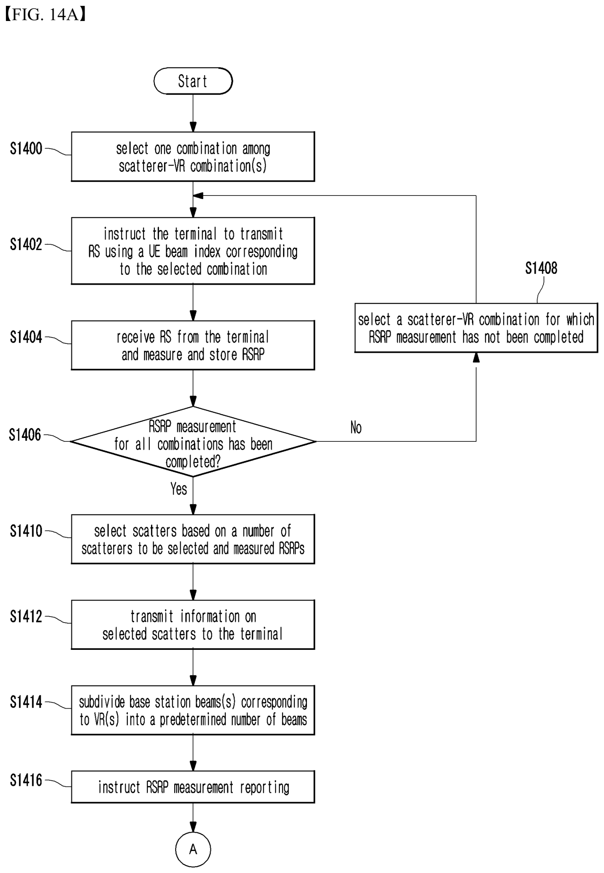

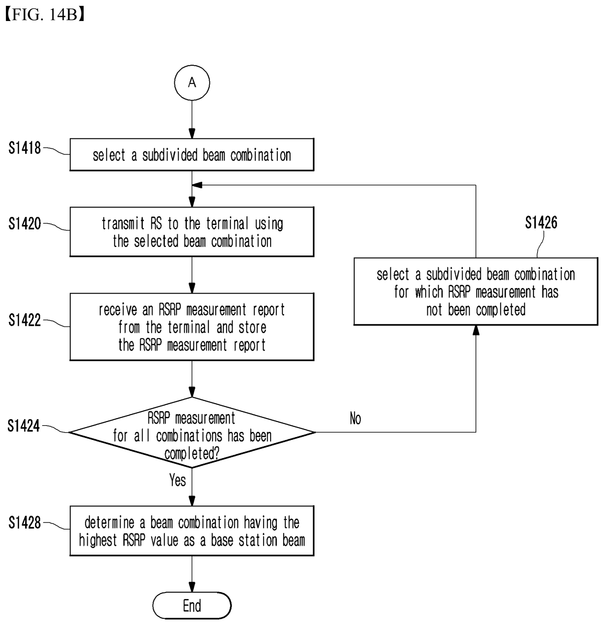

FIG. 14A is a partial flowchart of an operation for selecting a base station beam and a terminal beam in a communication system using an XL-MIMO antenna, and FIG. 14B is a remaining flowchart of the operation for selecting a base station beam and a terminal beam in the communication system using the XL-MIMO antenna.

In FIGS. 14A and 14B, an operation of the base station is described. In this case, when the base station transmits a specific signal (or message or information) to the terminal, the terminal may receive the signal (or message or information) transmitted by the base station. In addition, when the base station receives a specific signal (or message or information) from the terminal, the terminal may generate the specific signal and perform an operation of transmitting the specific signal to the base station.

In step S 1400, the base station may select one combination among scatterer-VR combinations as described above with reference to Table 9. For example, the base station may select one combination among a combination of scatterer #1 and VR #1, a combination of scatterer #2 and VR #2, or a combination of scatterer #3 and VR #3. In the present disclosure, for convenience of description, a case in which the combination of scatterer #1 and VR #1 is selected is described. That the combination of scatterer #1 and VR #1 is selected may be understood, according to the example of Table 3 described above, as being the same as a case in which base station beam index #1 and terminal beam index #1 are selected.

In step S1402, the base station may transmit, to the terminal, a terminal beam index corresponding to the selected combination and an RS transmission instruction. Such an RS transmission instruction may cause all terminal beams to be sequentially transmitted at once based on higher-layer signaling, or may instruct RS transmission separately before each time for each terminal beam index using DCI. The example of FIG. 14A illustrates a case in which the corresponding instruction is transmitted using DCI whenever RS transmission is required. In addition, the RS that the base station instructs the terminal to transmit may be, for example, SRS or separately defined RS.

When RS transmission is instructed using a specific beam index from the base station, the terminal may transmit RS using a corresponding beam at a time at which uplink transmission is allowed. In step S1404, the base station may receive RS transmitted by the terminal and, after measuring an RSRP, may store the measured RSRP. In this case, the base station may store the RSRP measurement value by mapping it to the combination of scatterer and VR.

In step S1406, the base station may determine whether RSRP measurement for all scatterer-VR combinations has been completed. When RSRP measurement for all scatterer-VR combinations has been completed, the base station may proceed to step S1410, and when RSRP measurement for all scatterer-VR combinations has not been completed, the base station may proceed to step S1408.

In step S1408, the base station may select a scatterer-VR combination for which RSRP measurement has not been completed. Thereafter, the base station may perform the process again from step S1402.

Based on the method described above, when RSRP values measured for respective scatterer-VR combinations are illustrated in a table, an example may be illustrated as in Table 10 below.

[Table 10]

| Scatterer-VR combination | Terminal beam | RSRP measurement value |
|---|---|---|
| scatterer #1 - VR #1 | terminal beam index #1 | RSRP_109 |
| scatterer #2 - VR #2 | terminal beam index #4 | RSRP_110 |
| scatterer #3 - VR #3 | terminal beam index #6 | RSRP_96 |

According to the example of Table 10, a case in which the base station and the terminal measure performance for a total of three scatterer-VR combinations and a case in which RSRP measurement values corresponding to respective scatterer-VR combinations are mapped and stored are illustrated. The result of Table 10 may be understood as follows.

The combination of scatterer #1-VR #1 may be understood as the combination of terminal beam index #1-VR #1, the combination of scatterer #2-VR #2 may be understood as the combination of terminal beam index #4-VR #2, and the combination of scatterer #3-VR #3 may be understood as the combination of terminal beam index #6-VR #3.

According to Table 10, the terminal may transmit RS to the base station using a terminal beam corresponding to terminal beam index #1, and the base station may receive the beam corresponding to terminal beam index #1 through VR #1. The base station may measure an RSRP of the RS transmitted through the terminal beam corresponding to terminal beam index #1 using VR #1. In the same manner, the terminal may transmit RS to the base station using a terminal beam corresponding to terminal beam index #4, and the base station may receive the beam corresponding to terminal beam index #4 through VR #2. The base station may measure an RSRP of the RS transmitted through the terminal beam corresponding to terminal beam index #4 using VR #2. A case corresponding to terminal beam index #6 may be understood in the same manner.

In step S1410, the base station may select scatterers based on a number of scatterers to be selected and measured RSRP values. In this case, when the number of scatterers to be selected is one, the base station may select a scatterer having the highest RSRP value among the scatterers. According to the example of Table 10, when only one scatterer is selected, the base station may select scatterer #2. When the number of scatterers to be selected is two, the base station may sequentially select two scatterers in an order from a scatterer having a high RSRP value among the scatterers. According to the example of Table 10, when two scatterers are selected, the base station may sequentially select scatterer #2 and scatterer #1.

Meanwhile, when the base station determines the number of scatterers to be selected, the base station may determine the number in consideration of an amount of traffic of the base station and a number of beams that can be simultaneously formed by the terminal. In this case, information on the number of beams that can be simultaneously formed by the terminal may be received by being included in the VR-related information described in Section [1] above. In another example, information on the number of beams that can be simultaneously formed by the terminal may be transmitted through uplink control information (UCI) that the terminal transmits to the base station. In another example, a transmitted message when the terminal performs a random access (RA) procedure to the base station may be used. For example, information on the number of beams that can be simultaneously formed by the terminal may be included in a first message (message 1, Msg1) that the terminal transmits to the base station when the terminal performs a four-step RA procedure, or may be included in a message A (message A, MsgA) that the terminal transmits to the base station when the terminal performs a two-step RA procedure. In another example, information on the number of beams that can be simultaneously formed by the terminal may be transmitted by being included in UE assistance information that the terminal transmits to the base station, or may be transmitted by being included in higher layer signaling (e.g., RRC signaling).

In step S1412, the base station may transmit information on the selected scatterer(s) to the terminal. The information on the selected scatterer(s) may be transmitted to the terminal using one of DCI, a MAC CE, or RRC signaling. In another example, when configuration of a specific terminal-dedicated SIB is possible, the information on the selected scatterer(s) may be transmitted through the SIB. That the information on the scatterer(s) is transmitted to the terminal may also be understood as that a terminal beam index to be used by the terminal and/or information on a base station beam index used in the scatterer sensing procedure is transmitted to the terminal. Therefore, the terminal may identify the terminal beam to be used based on the received information on the scatterer(s).

In step S1414, the base station may subdivide base station beam(s) for the selected VR(s) into a predetermined number of beams. Since a base station beam used for scatterer sensing is a beam formed through a relatively large number of antennas, it may be a beam with a wide width. Therefore, the base station may further subdivide a wide beam. For example, a beam corresponding to base station beam index #1 may be subdivided into n beams. Here, n may be a natural number equal to or greater than 1, and a case in which n is 1 may mean that subdivision is not applied. Hereinafter, for convenience of description, a case in which n is 3, in other words, a case in which each base station beam is divided into three separate beams, is assumed and described.

As described above, when base station beam index #1 corresponding to VR #1 and base station beam index #3 corresponding to VR #2 are selected, the base station may divide base station beam index #1 into three beams as candidate beams of VR #1.

In step S1416, the base station may transmit an instruction for RSRP measurement reporting to the terminal. Therefore, the terminal may receive the instruction for RSRP measurement reporting from the base station. The instruction for RSRP measurement reporting may be received through higher-layer signaling such as RRC signaling or a MAC CE, or may be received as information such as DCI. The instruction for RSRP measurement reporting may include information on an RSRP measurement time and a reporting time. In addition, the instruction for RSRP measurement reporting may include information on a terminal beam to be used by the terminal. When the terminal knows information on the terminal beam that the terminal needs to measure from the scatterer information transmitted in step S1412, the information on the terminal beam may not be included in the instruction for RSRP measurement reporting.

In step S1418, the base station may select a combination of subdivided beams. For example, when the base station beam of base station beam index #1 corresponding to VR #1 is subdivided into three beams as described above, respective subdivided base station beams may be distinguished as base station beam index #1-1, base station beam index #1-2, and base station beam index #1-3. In addition, when the base station beam of base station beam index #3 corresponding to VR #2 is subdivided into three beams as described above, respective subdivided base station beams may be distinguished as base station beam index #3-1, base station beam index #3-2, and base station beam index #3-3.

As such, since the base station beam corresponding to base station beam index #1 is divided into three subdivided beams and the base station beam corresponding to base station beam index #3 is composed of three subdivided beams, there may exist nine combinations of subdivided beams.

In step S1418, the base station may select one combination among the nine combinations of subdivided base station beams.

In step S1420, the base station may transmit RS to the terminal using the selected subdivided beam combination. For example, when the base station selects the subdivided beam combination of base station beam index #1-1 and base station beam index #3-1, RS may be transmitted to the terminal using a beam corresponding to base station beam index #1-1 through VR #1 and using a beam corresponding to base station beam index #3-1 through VR #2. In another example, when the base station selects the subdivided beam combination of base station beam index #1-1 and base station beam index #3-2, RS may be transmitted to the terminal using a beam corresponding to base station beam index #1-1 through VR #1 and using a beam corresponding to base station beam index #3-2 through VR #2.

Accordingly, the terminal may receive subdivided beams through VR #1 and subdivided beams through VR #2. In addition, since respective beams include RSs, the terminal may receive RSs received in the respective beams and may measure RSRP. The terminal may report the measured RSRPs to the base station at the RSRP reporting time based on the instruction for RSRP measurement reporting received from the base station in step S1416.

In step S1422, the base station may receive an RSRP measurement report from the terminal and may store the report by mapping it to the information on the subdivided beam pair. Then, in step S1424, the base station may determine whether RSRP measurement for all subdivided beam combinations has been completed. If RSRP measurement for all subdivided beam combinations has not been completed, the base station may proceed to step S1426. On the other hand, if RSRP measurement for all subdivided beam combinations has been completed, the base station may proceed to step S1428.

In step S1426, the base station may select a subdivided beam combination for which RSRP measurement has not been completed. Then, step S1420 may be performed again. If the instruction for RSRP measurement reporting of step S1416 is transmitted as DCI, in step S1420 the base station may transmit the instruction for RSRP measurement reporting to the terminal again (not shown in FIG. 14B).

Through the above procedure, when pairs of respective subdivided beams, RSRP measurement values received from the terminal, and reception beams of the terminal are illustrated in a table, an example may be illustrated as in Table 11 below.

[Table 11]

| Candidate beam of VR #1 | Candidate beam of VR #2 | Terminal beam | RSRP measurement value |
|---|---|---|---|
| base station beam index #1-1 | base station beam index #3-1 | terminal beam index #1, terminal beam index #4 | RSRP_79 |
| base station beam index #1-1 | base station beam index #3-2 | terminal beam index #1, terminal beam index #4 | RSRP_88 |
| base station beam index #1-1 | base station beam index #3-3 | terminal beam index #1, terminal beam index #4 | RSRP_97 |
| ... | ... | | ... |
| base station beam index #1-3 | base station beam index #3-3 | terminal beam index #1, terminal beam index #4 | RSRP_64 |

According to Table 11, although pairs of candidate beams of VR #1 and candidate beams of VR #2 are changed, it can be seen that terminal beam indexes used for scatterer detection above are used as they are.

In step S1428, the base station may determine a subdivided beam combination having the highest RSRP value as a base station beam. According to the example of Table 11, a case in which the highest RSRP value is obtained may correspond to a case of using the subdivided beam combination of base station beam index #1-1 and base station beam index #3-3. Therefore, the base station may determine the combination of base station beam index #1-1 and base station beam index #3-3 as a base station beam for communication with the terminal.

Hereinafter, an overall operation of Sections [1] to [3] described above is described in an overall manner with reference to the accompanying drawings.

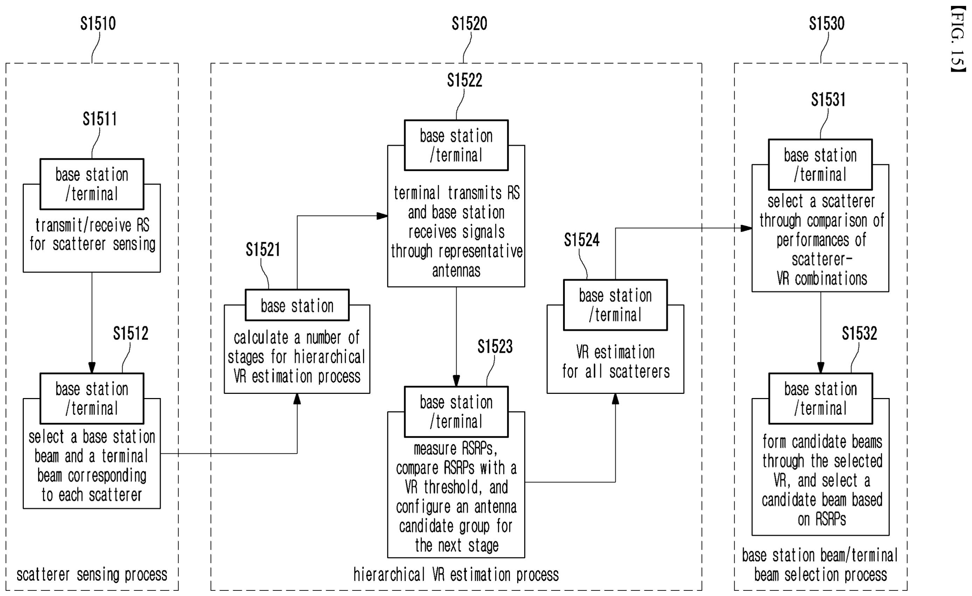

FIG. 15 is a conceptual diagram illustrating a beam management method in consideration of VR in a communication system using an XL-MIMO antenna.

Step S1510 may correspond to the scatterer sensing process. As described above, the scatterer sensing process may be a procedure of determining whether a scatterer exists on a communication path between a base station and a terminal in a communication system using an XL-MIMO antenna. This is described in more detail as follows.

In step S1511, one of the base station and the terminal may serve as a subject and may transmit RS for scatterer sensing. For example, as described in FIG. 11A, the base station may serve as the subject and may transmit RS to the terminal. In the case of FIG. 11A, the terminal may be a receiving node that receives RS transmitted by the base station. In another example, in the case of FIG. 11B, the terminal may serve as the subject and may transmit RS to the base station. In the case of FIG. 11B, the base station may be a receiving node that receives RS transmitted by the terminal.

In step S1512, the base station and the terminal may select a base station beam and a terminal beam corresponding to a scatterer.

Since steps S1511 and S1512 are the same as the contents described above with reference to FIGS. 11A and 11B, a redundant description is omitted.

Step S1520 may correspond to the hierarchical VR estimation process. As described above, step S1520 may correspond to a procedure of hierarchically estimating VRs of the XL-MIMO antenna corresponding to sensed scatterers. Step S1520 may be configured as follows.

In step S1521, the base station may calculate (or determine) a number of stages of the hierarchical VR estimation process. The base station may perform the VR estimation process only when the terminal supports VR estimation. When calculating the number of stages of the VR estimation process, the base station may consider VR-related information received from the terminal, for example, latency requirement information, and the number of antenna ports that are available for simultaneous transmission and reception at the base station may also be considered.

In step S1522, the base station may receive RS from the terminal through representative antennas. Therefore, the base station may instruct the terminal in advance to transmit RS for RS reception.

In step S1523, the base station may measure RSRPs of the RSs received from the terminal. The base station may determine antenna candidate groups by comparing measured RSRP values with a threshold. In this case, the antenna candidate groups may be determined in the same manner as described above with reference to FIGS. 13A and 13B.

In step S1524, the base station may estimate VRs for all scatterers. VR estimation may be performed by the same procedure as the procedures of FIGS. 12A and 12B described above and the contents described with reference to FIGS. 13A and 13B.

Although, in step S1520, the hierarchical VR estimation process has been described from a base station perspective, as described above, the process may also be performed from a terminal perspective.

Step S1530 may correspond to the base station beam and terminal beam selection process. The base station beams and the terminal beams corresponding to respective scatterers have been determined in steps S1510 and S1520 described above. In the state where the base station beam and the terminal beam corresponding to respective scatterers have been determined, a final base station beam and a final terminal beam may be selected as follows.

In step S1531, the base station may compare performances for scatterer-VR combinations. The performance comparison operation may include a step of the terminal transmitting RS to the base station, a step of the base station receiving RS and measuring RSRP, and a step of the base station selecting one scatterer-VR combination having the highest RSRP value among RSRPs measured by the base station or selecting predetermined scatterer-VR combinations in order from higher RSRP values.

In step S1532, the base station may transmit RSs to the terminal through subdivided candidate beams through selected VRs, and may select final base station beam(s) based on RSRP values received from the terminal. The operation of step S1530 described above may correspond to the operations of FIGS. 14A and 14B described above.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a terminal, comprising:

   transmitting, to a base station, a first signal including a terminal beam index for each beam and a first reference signal (RS) by performing beam sweeping of terminal beams;
   receiving, from the base station, information on scatterer(s) existing on a communication path between the terminal and the base station;
   receiving, from the base station, information on a number of estimation stages for antenna estimation;
   performing, with the base station, a first procedure of hierarchically estimating visibility regions (VRs) of antennas of the base station by the number of estimation stages for each scatterer of the scatterer(s); and

performing, with the base station, a second procedure of determining base station beams to be used in each of the VRs,

wherein the information on the scatterer(s) includes a scatterer identifier and a terminal beam index corresponding to each scatterer.

2. The method of claim 1, further comprising: transmitting information on a service to be provided to the terminal and VR-related information to the base station after receiving the information on the scatterer(s).

3. The method of claim 2, wherein the VR-related information includes at least one of information on whether hierarchical VR estimation is supported, or information on a number of beams that the terminal is capable of forming simultaneously.

4. The method of claim 1, wherein the first procedure further comprises:

receiving, from the base station, an RS transmission instruction through a terminal beam corresponding to at least one scatterer of the scatterer(s); and
transmitting RS based on the RS transmission instruction.

5. The method of claim 4, wherein the RS transmission instruction includes at least one of a periodicity of transmitting the RS, a time of transmitting the RS, or a number of transmissions of the RS.

6. The method of claim 1, wherein the second procedure further comprises:

receiving, from the base station, an RS transmission instruction through a terminal beam corresponding to at least one scatterer of the scatterer(s);
transmitting a second signal including a second RS based on the RS transmission instruction;
receiving, from the base station, a reference signals received power (RSRP) measurement reporting instruction message including terminal beam information;
measuring an RSRP of an RS received from the base station through a terminal beam indicated by the terminal beam information; and
reporting the measured RSRP to the base station.

7. The method of claim 1, wherein the base station has an extra-large scale multiple input multiple output (XL-MIMO) antenna, and each of the scatterer(s) includes at least one or more of a building, a vehicle, a person, a structure, an intelligent reflecting surface (IRS), a reconfigurable intelligent surface (RIS), or particles in the air.

8. A method of a base station, comprising:

receiving, through beam sweeping over an entire antenna array of an extra-large scale multiple input multiple output (XL-MIMO) antenna, a first signal including a reference signal (RS) from a terminal;
measuring a first reference signals received power (RSRP) of the first signal to acquire information on scatterer(s);
transmitting the information on the scatterer(s) to the terminal;
determining a number of estimation stages for XL-MIMO antenna estimation;
transmitting information on the determined number of estimation stages to the terminal;
performing a first procedure of hierarchically estimating visibility regions (VRs) of the XL-MIMO antenna by the number of estimation stages for each scatterer of the scatterer(s); and
performing a second procedure of determining base station beams to be used with the terminal in one or more VRs,
wherein the information on the scatterer(s) includes a scatterer identifier and a terminal beam index corresponding to each scatterer.

9. The method of claim 8, further comprising receiving information on a service of the terminal and VR-related information from the terminal after transmitting the information on the scatterer(s).

10. The method of claim 9, wherein the VR-related information includes at least one of information on whether hierarchical VR estimation is supported, or information on a number of beams that the terminal is capable of forming simultaneously.

**11.** The method of claim 8, wherein the first procedure further comprises:

determining a number of estimation stages of the VRs; and
performing a third procedure for VR determination on an entire array of the XL-MIMO antenna by the determined number of estimation stages,
wherein the number of estimation stages of the VRs is determined based on at least one of a latency requirement received from the terminal or a number of antenna ports that the base station is capable of using transmission and reception simultaneously.

**12.** The method of claim 11, wherein the third procedure comprises, for each scatterer:

dividing the entire array of the XL-MIMO antenna into a predetermined number of first antenna regions;
selecting first representative antennas for the divided first antenna regions, respectively;
measuring second RSRPs of RSs received from the terminal through the first representative antennas;
determining first antenna region(s) including the first representative antennas having the second RSRPs exceeding a preset first threshold as VR candidate region(s);
dividing each of the VR candidate region(s) into a predetermined number of second antenna regions;
selecting second representative antennas for the divided second antenna regions, respectively;
measuring third RSRPs of RSs received from the terminal through the second representative antennas; and
determining second antenna region(s) including the second representative antennas having the third RSRP exceeding a preset second threshold as a VR.

**13.** The method of claim 8, wherein the second procedure further comprises, for each scatterer:

transmitting an RS transmission instruction message through a terminal beam corresponding to each scatterer;
measuring fourth RSRPs of RSs received from the terminal through antennas of the VR;
determining a scatterer-VR combination based on the measured fourth RSRPs; and
performing a fourth procedure of determining a subdivided beam to communicate with the terminal based on the determined scatterer-VR combination.

**14.** The method of claim 13, wherein the fourth procedure further comprises:

transmitting information on the determined scatterer-VR combination to the terminal;
subdividing each of base station beams to be transmitted through the VRs into a predetermined number of beams;
transmitting, to the terminal, an RSRP measurement reporting instruction message including terminal beam information;
determining combinations composed of pairs of subdivided beams of different VRs;
transmitting RSs to the terminal through beams based on the combinations composed of the pairs of subdivided beams;
receiving, from the terminal, an RSRP reporting message corresponding to the beams based on the combinations composed of the pairs of subdivided beams; and
determining a base station beam among the subdivided beams based on the received RSRP reporting message.

**15.** A terminal comprising at least one processor,
wherein the at least one processor is configured to:

transmit, to a base station, a first signal including a terminal beam index for each beam and a first reference signal (RS) by performing beam sweeping of terminal beams;
receive, from the base station, information on scatterer(s) existing on a communication path between the terminal and the base station;
receive, from the base station, information on a number of estimation stages for antenna estimation;
perform, with the base station, a first procedure of hierarchically estimating visibility regions (VRs) of antennas of the base station by the number of estimation stages for each scatterer of the scatterer(s); and
perform, with the base station, a second procedure of determining base station beams to be used in each of the VRs,
wherein the information on the scatterer(s) includes a scatterer identifier and a terminal beam index corresponding to each scatterer.

16. The terminal of claim 15, wherein the at least one processor is further configured to transmit information on a service to be provided to the terminal and VR-related information to the base station after receiving the information on the scatterer(s).

17. The terminal of claim 16, wherein the VR-related information includes at least one of information on whether hierarchical VR estimation is supported, or information on a number of beams that the terminal is capable of forming simultaneously.

18. The terminal of claim 15, wherein the at least one processor is further configured, during the first procedure, to:

receive, from the base station, an RS transmission instruction through a terminal beam corresponding to at least one scatterer of the scatterer(s); and
transmit RS based on the RS transmission instruction.

19. The terminal of claim 18, wherein the RS transmission instruction includes at least one of a periodicity of transmitting the RS, a time of transmitting the RS, or a number of transmissions of the RS.

20. The terminal of claim 15, wherein the at least one processor is further configured, during the second procedure, to:

receive, from the base station, an RS transmission instruction through a terminal beam corresponding to at least one scatterer of the scatterer(s);
transmit a second signal including a second RS based on the RS transmission instruction;
receive, from the base station, a reference signals received power (RSRP) measurement reporting instruction message including terminal beam information;
measure an RSRP of an RS received from the base station through a terminal beam indicated by the terminal beam information; and
report the measured RSRP to the base station.

【FIG. 1】

【FIG. 2】

【FIG. 3】

【FIG. 4A】

【FIG. 4B】

【FIG. 5】

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

【FIG. 8】

REG

N subcarriers

N OFDM symbols

RE

【FIG. 9】

【FIG. 10】

【FIG. 11A】

【FIG. 11B】

```
       terminal                                    base station
          │                                              │
          │                     •                        │
          │                     •                        │
          │                     •                        │
   ┌──────────────────────┐                              │
   │ generate second signal │──── S1130                   │
   └──────────────────────┘                              │
          │                                              │
          │      second signal (terminal information     │
          │       and reference signal) transmission     │
          │─────────────────────────────────────────────▶│ ┐
          │                     •                        │ │
          │                     •                        │ ├ S1132
          │                     •                        │ │
          │─────────────────────────────────────────────▶│ ┘
          │                                              │
          │                              ┌──────────────────────┐
          │                   S1134 ─────│   RSRP measurement    │
          │                              └──────────────────────┘
          │                              ┌──────────────────────┐
          │                              │ determine presence of │
          │                   S1136 ─────│   scatterer(s) based on │
          │                              │    measured RSRPs     │
          │                              └──────────────────────┘
          │             scatterer information            │
  S1138 ──│◀─────────────────────────────────────────────│
          │                     •                        │
          │                     •                        │
          │                     •                        │
          │   service information and VR-related information │
          │─ ─ ─ ─ ─ ─ ─ ─ ─ ─ ─ ─ ─ ─ ─ ─ ─ ─ ─ ─ ─ ─▶│──── S1140
          │                                              │
```

【FIG. 12A】

Start

S1200 — terminal supports VR estimation?

No

S1210 — determine and indicate an operation defined for terminals not supporting VR estimation

End

Yes

S1220 — determine a number P of hierarchical estimation process stages, and transmit information on the number to the terminal

C

S1222 — determine scatter(s) for which VR estimation is to be performed, and transmit scatterer information to the terminal

S1224 — set a VR estimation stage p to 1

B

S1226 — select a representative antenna from each of antenna regions for RS reception in the VR estimation stage #p

S1228 — instruct the terminal to transmit RS

S1230 — receive RS through the representative antennas and measure RSRPs

A

【FIG. 12B】

【FIG. 13A】

【FIG. 13B】

【FIG. 14A】

```
                        ( Start )
                            │
                            ▼
S1400 ──┐   ┌─────────────────────────────────┐
        └───│  select one combination among   │
            │    scatterer-VR combination(s)  │
            └─────────────────────────────────┘
                            │
                            ▼ ◄──────────────────────────────────┐
S1402 ──┐   ┌─────────────────────────────────┐                 │
        └───│   instruct the terminal to transmit │             │
            │ RS using a UE beam index corresponding │          │
            │      to the selected combination  │                │
            └─────────────────────────────────┘      S1408      │
                            │                           ┐        │
                            ▼              ┌─────────────┴──────────────────┐
S1404 ──┐   ┌─────────────────────────────────┐  │ select a scatterer-VR combination for which │
        └───│     receive RS from the terminal │  │  RSRP measurement has not been completed │
            │     and measure and store RSRP  │  └──────────────────────────────┘
            └─────────────────────────────────┘              ▲
                            │                                 │
                            ▼                                 │
S1406 ──┐       ╱╲ RSRP measurement  ╲        No              │
        └───  ╱   for all combinations has been ╲ ────────────┘
              ╲      completed?       ╱
                ╲      ╱
                  Yes
                   │
                   ▼
S1410 ──┐   ┌─────────────────────────────────┐
        └───│   select scatters based on a number of │
            │ scatterers to be selected and measured RSRPs │
            └─────────────────────────────────┘
                   │
                   ▼
S1412 ──┐   ┌─────────────────────────────────┐
        └───│      transmit information on     │
            │    selected scatters to the terminal │
            └─────────────────────────────────┘
                   │
                   ▼
S1414 ──┐   ┌─────────────────────────────────┐
        └───│ subdivide base station beams(s) corresponding │
            │ to VR(s) into a predetermined number of beams │
            └─────────────────────────────────┘
                   │
                   ▼
S1416 ──┐   ┌─────────────────────────────────┐
        └───│   instruct RSRP measurement reporting │
            └─────────────────────────────────┘
                   │
                   ▼
                 ( A )
```

【FIG. 14B】

A

S1418 — select a subdivided beam combination

S1420 — transmit RS to the terminal using
the selected beam combination

S1422 — receive an RSRP measurement report
from the terminal and store
the RSRP measurement report

S1424 — RSRP measurement
for all combinations has been
completed?

No

S1426
select a subdivided beam combination
for which RSRP measurement has
not been completed

Yes

S1428 — determine a beam combination having the
highest RSRP value as a base station beam

End

[FIG. 15]

EP 4 738 720 A1

S1510

S1511

base station /terminal

transmit/receive RS for scatterer sensing

S1512

base station /terminal

select a base station beam and a terminal beam corresponding to each scatterer

scatterer sensing process

S1520

S1522

base station /terminal

terminal transmits RS and base station receives signals through representative antennas

S1521

base station

calculate a number of stages for hierarchical VR estimation process

S1523

base station /terminal

measure RSRPs, compare RSRPs with a VR threshold, and configure an antenna candidate group for the next stage

S1524

base station /terminal

VR estimation for all scatterers

hierarchical VR estimation process

S1530

S1531

base station /terminal

select a scatterer through comparison of performances of scatterer-VR combinations

S1532

base station /terminal

form candidate beams through the selected VR, and select a candidate beam based on RSRPs

base station beam/terminal beam selection process

## INTERNATIONAL SEARCH REPORT

| International application No. |
|---|
| **PCT/KR2024/009116** |

| A. | CLASSIFICATION OF SUBJECT MATTER |
|---|---|

**H04B 7/06**(2006.01)i; **H04B 7/0413**(2017.01)i; **H04B 7/04**(2006.01)i; **H04B 17/318**(2015.01)i; **H04W 72/21**(2023.01)i; **H04W 72/231**(2023.01)i; **H04W 72/232**(2023.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04B 7/0413(2017.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 초대규모 다중 입력 다중 출력(extra-large scale multiple input multiple output, XL-MIMO), 산란체(scatterer), 가시 영역(visibility region), 추정 단계 수(estimation step number), 빔(beam)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | MARQUES GUERRA, David William et al. Clustered Double-Scattering Channel Modeling for XL-MIMO With Uniform Arrays. IEEE Access. Volume: 10, 28 February 2022. See sections II-III. | 1-20 |
| A | LIU, Wang et al. Deep learning based beam training for extremely large-scale massive MIMO in near-field domain. arXiv:2209.13138v2 [cs.IT]. 28 September 2022. See sections II.A-III.C. | 1-20 |
| A | SHI, Xu et al. Hierarchical Codebook-based Beam Training for Extremely Large-Scale Massive MIMO. arXiv:2210.03345v1 [cs.IT]. 07 October 2022. See sections II.A-IV.B. | 1-20 |
| A | WO 2023-001825 A1 (CONTINENTAL AUTOMOTIVE TECHNOLOGIES GMBH) 26 January 2023 (2023-01-26) See page 9, line 3 – page 29, line 32; and figure 1. | 1-20 |
| A | CN 115776317 A (HUAWEI TECHNOLOGIES CO., LTD.) 10 March 2023 (2023-03-10) See paragraphs [0095]-[0190]; and figures 4-7. | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **15 October 2024** | **15 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009116**

| Patent document cited in search report | | | Publication date (day/month/year) | Patent family member(s) | | | Publication date (day/month/year) |
|---|---|---|---|---|---|---|---|
| WO | 2023-001825 | A1 | 26 January 2023 | CN | 117652106 | A | 05 March 2024 |
| | | | | EP | 4374496 | A1 | 29 May 2024 |
| | | | | JP | 2024-529926 | A | 14 August 2024 |
| | | | | KR | 10-2024-0021279 | A | 16 February 2024 |
| CN | 115776317 | A | 10 March 2023 | EP | 4391411 | A1 | 26 June 2024 |
| | | | | US | 2024-0214088 | A1 | 27 June 2024 |
| | | | | WO | 2023-035968 | A1 | 16 March 2023 |

Form PCT/ISA/210 (patent family annex) (July 2022)